# EUROPEAN PATENT SPECIFICATION

(11) **EP 4 187 824 B1**
(45) Date of publication and mention of the grant of the patent: **22.10.2025**
(21) Application number: 20946168.0
(22) Date of filing: 24.07.2020
(51) Int. Cl.: H04L 5/00, H04W 72/40, H04W 74/00, H04W 92/18, H04L 27/00

(54) **WIRELESS COMMUNICATION METHOD AND DEVICE**
VERFAHREN UND VORRICHTUNG ZUR DRAHTLOSEN KOMMUNIKATION
PROCÉDÉ ET DISPOSITIF DE COMMUNICATION SANS FIL

(43) Date of publication of application: 31.05.2023
(73) Proprietor: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN); ZHANG, Zhi, Dongguan, Guangdong 523860 (CN)
(74) Representative: Taor, Simon Edward William
(86) International application number: PCT/CN2020/104554
(87) International publication number: WO 2022/016545

(56) References cited:
- WO-A1-2015/116159
- WO-A1-2021/223046
- WO-A1-2022/020829
- CN-A- 106 688 297
- CN-A- 109 156 037
- CN-A- 110 100 462
- US-A1- 2017 202 043
- FUJITSU: "Resource Allocation for NR V2X Sidelink Communication considering low latency requirement", 28 September 2018 (2018-09-28), pages 1 - 6, XP051504292, Retrieved from the Internet <URL:http://www.3gpp.org/ftp/tsg%5Fran/WG1%5FRL1/TSGR1%5F94b/Docs/R1%2D1810593%2Ezip>
- APPLE: "Considerations on NR V2X mode 2 resource allocation mechanism", 3GPP DRAFT; R1-1907335 CONSIDERATIONS ON NR V2X MODE 2 RESOURCE ALLOCATION MECHANISM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 4 May 2019 (2019-05-04), Mobile Competence Centre ; 650, route des Lucioles ; F-06921 Sophia-Antipolis Cedex ; France , XP051709357

## Description

### TECHNICAL FIELD

The embodiments of the present disclosure relate to communication technology, and more particularly, to a wireless communication method.

### BACKGROUND

When the sidelink communication of terminal devices operates in the unlicensed frequency band, the terminal devices may not be able to obtain valid sidelink configuration information on the unlicensed frequency band. The terminal devices need to access the channel by means of channel sensing (Carrier Sense Multiple Access, CSMA) / avoidance (Collision Avoidance, CA) before operating on the sidelink in the unlicensed frequency band, and their access delay and reliability of data transmission are uncontrollable, and thus cannot meet Quality of Service (QoS) requirements of some service data. US20170202043A1 discloses a method and apparatus for performing direct device-to-device communication in wireless communication system supporting unlicensed band. WO2015116159A1 discloses unlicensed band transmission. XP51504292A discloses resource allocation for NR V2X sidelink communication considering low latency requirement.

### SUMMARY

A wireless communication method is provided, capable of reducing the access delay and improving the reliability of data transmission, and accordingly, meeting the QoS requirement of service data.

A wireless communication method according to the invention is provided as defined in claim

With the above technical solutions, by obtaining the sidelink configuration information for the sidelink licensed carrier and the sidelink unlicensed carrier, the sidelink licensed carrier and the sidelink unlicensed carrier can be managed coordinately. That is, with the sidelink licensed carrier, the access delay of the unlicensed carrier and the reliability of data transmission on the sidelink unlicensed carrier become controllable, thereby reducing the access delay and improving the reliability of data transmission. Accordingly, the QoS requirement of the service data can be met.

### BRIEF DESCRIPTION OF THE DRAWINGS

FIGS. 1 to 7 show examples of scenarios in which the embodiments of the present disclosure may be applied.
FIGS. 8 to FIG. 11 are schematic flowcharts each illustrating a wireless communication method according to an embodiment of the present disclosure.
FIG. 12 and FIG. 13 are schematic block diagrams each showing a terminal device according to an embodiment of the present disclosure.
FIG. 14 is a schematic block diagram of a chip according to an embodiment of the present disclosure.

### DETAILED DESCRIPTION

The technical solutions in the embodiments of the present disclosure will be described below with reference to the figures.

The embodiments of the present disclosure can be applied to any terminal-device-to-terminal-device communication framework, e.g., Vehicle to Vehicle (V2V), Vehicle to Everything (V2X), Device to Device (D2D), etc. Here, the terminal device in the embodiment of the present disclosure may be any device or apparatus configured with a physical layer and a Media Access Control (MAC) layer. The terminal device may also be referred to as an access terminal, e.g., User Equipment (UE), subscriber unit, subscriber station, mobile station, remote station, remote terminal, mobile device, user terminal, terminal, wireless communication device, user agent, or user apparatus. The access terminal may be a cellular phone, a cordless phone, a Session Initiation Protocol (SIP) phone, a Wireless Local Loop (WLL) station, a Personal Digital Assistant (PDA), a wireless communication-enabled handheld device, a computing device, or another linear processing device connected to a wireless modem, a vehicle-mounted device, a wearable device, etc. The embodiment of the present disclosure is described by taking a vehicle-mounted terminal as an example, but is not limited thereto.

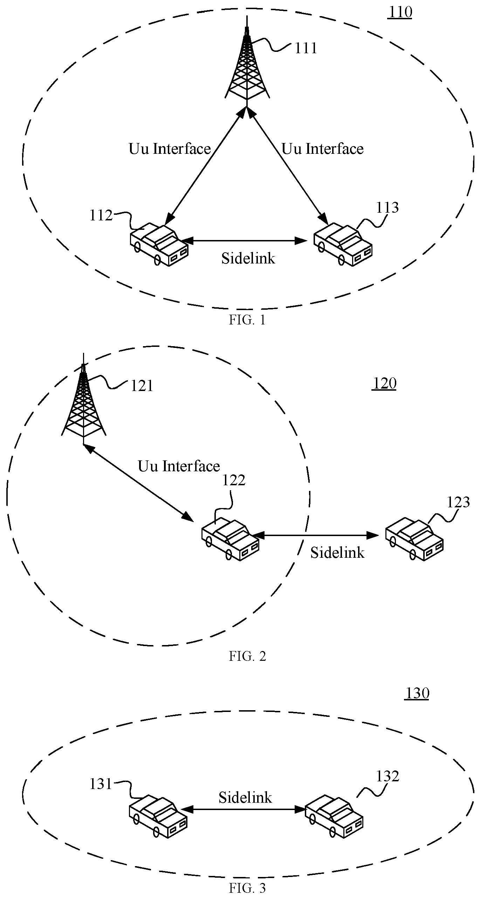

FIG. 1 is an example of a system framework 110 in which the embodiments of the present disclosure can be applied.

The system framework 100 may also be referred to as an in-network-coverage sidelink communication system framework.

As shown in FIG. 1, a terminal device 112 and a terminal device 113 are covered within the range of a network device 111, and the terminal device 112 and the terminal device 113 perform sidelink communication within the network coverage of the network device 111. Each of the terminal device 112 and the terminal device 113 can be connected to the network device 111 via a Uu interface, and the terminal device 112 and the terminal device 113 can perform sidelink communication via a sidelink. In other words, within the system framework 110, all terminals performing sidelink communication are within the coverage of the same network device. Optionally, both the terminal device 112 and the terminal device 113 may perform sidelink communication based on a same sidelink configuration from receiving configuration signaling from the network device 110.

FIG. 2 shows an example of a system framework 120 in which the embodiments of the present disclosure can be applied.

The system framework 100 may also be referred to as a sidelink communication system framework with partial network coverage.

As shown in FIG. 2, a terminal device 122 is located within the network coverage of a network device 121, and a terminal device 123 is located outside the network coverage of the network device 121. The terminal device 122 can be connected to the network device 121 via a Uu interface, and the terminal device 122 and the terminal device 123 can perform sidelink communication via a sidelink. In other words, within the system framework 120, some of the terminals performing sidelink communication are located within the coverage of the network device 121, and these terminals can receive configuration signaling from the network device 121, and perform sidelink communication according to the configuration of the network device 121. However, other terminals located outside the network coverage cannot receive the configuration signaling from the network device 121. In this case, the terminals can determine the sidelink configuration and perform sidelink communication according to pre-configuration information and information carried in a Sidelink Broadcast Channel (PSBCH) transmitted by a terminal (e.g., the terminal device 122) within the network coverage. Optionally, a terminal device located within the network coverage can be referred to as an IC terminal, and a terminal device located outside the network coverage can be referred to as an OOC terminal. Optionally, the sidelink configuration determined by the IC terminal based on the configuration signaling from the cellular network should be consistent with the sidelink configuration for the sidelink communication as determined by the OOC terminal based on pre-configuration and PSBCH, so as to ensure the normal sidelink communication between the IC terminal and the OOC terminal. For example, the carrier frequency position and the relevant configuration of the sidelink frequency part (SL BWP) on the carrier (such as BWP position, bandwidth, subcarrier spacing, CP length, positions and number of sidelink symbols in the time slot, etc.) determined by both parties should be the same. Optionally, the transmission resource pool determined by the IC terminal from the network configuration should be included in the reception resource pool pre-configured for the OOC, and the reception resource pool determined by the IC terminal based on the network configuration should include the transmission resource pool determined by the OOC terminal based on pre-configuration. Optionally, the timing difference used by the IC terminal and the OOC terminal should be smaller than a certain value to ensure normal sidelink communication between the IC terminal and the OOC terminal. For example, the IC terminal and the OOC terminal may use a same synchronization source, such as GNSS, or use different synchronization sources with consistent timing, e.g., the IC terminal may use a gNB as the synchronization source, and the OOC terminal may use the IC terminal that transmits a synchronization signal as the synchronization source.

FIG. 3 shows an example of a system framework 130 in which the embodiments of the present disclosure can be applied.

The system framework 100 may also be referred to as an out-of-network-coverage communication system framework.

As shown in FIG. 3, a terminal device 131 and a terminal device 132 are not within the coverage of a network device, and the terminal device 131 and the terminal device 132 can perform sidelink communication via a sidelink. In other words, in the system framework 130, all terminals performing sidelink communication are located outside the coverage of the network. Optionally, all terminals may determine a sidelink configuration for sidelink communication according to pre-configuration information. Optionally, the pre-configuration for the OOC terminals that perform sidelink communication with each other should be consistent. Optionally, the above OOC terminals should use a same synchronization source or use different synchronization sources with consistent timing, so as to ensure that the timing difference between the terminals is smaller than a certain value.

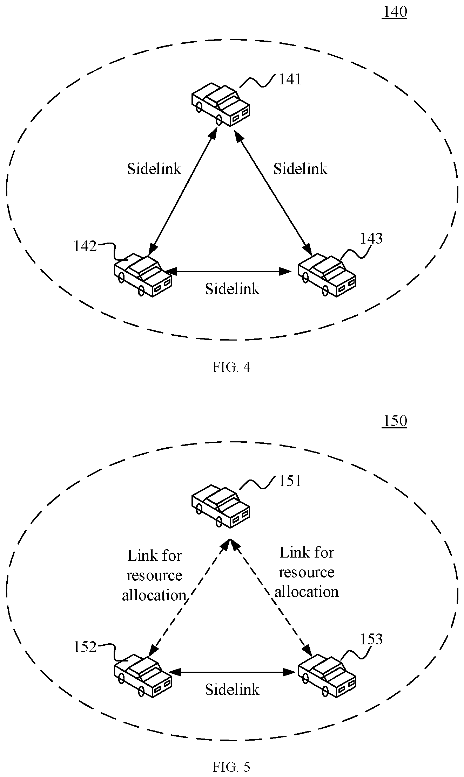

FIG. 4 shows an example of a system framework 140 in which the embodiments of the present disclosure can be applied.

The system framework 140 may also be referred to as a scenario or system without a central control node.

As shown in FIG. 4, a terminal device 141, a terminal device 142 and a terminal device 143 can all serve as receivers and transmitters, and the terminal device 141, the terminal device 142 and the terminal device 143 can perform sidelink communication via a sidelink. The sidelink communication resource between a transmitter and a receiver is independently selected by the transmitter from a specific resource pool.

FIG. 5 shows an example of a system framework 150 in which the embodiments of the present disclosure can be applied.

The system framework 150 may also be referred to as a scenario or system with a central control node.

As shown in FIG. 5, a terminal device 151, a terminal device 152, and a terminal device 153 can all serve as receivers and transmitters. Here, the terminal device 151 serves as a central control node, which can be also referred to as Cluster Header (CH). The terminal device 152 and the terminal device 153 serve as member nodes in the system framework 150, and the member nodes may also be referred to as Cluster Members (CMs). Optionally, the central control node has one of the following functions: establishing of a communication group; joining and leaving of group members; resource coordination, allocating of sidelink transmission resources for other terminals, and receiving of sidelink feedback information from other terminals; or resource coordination with other communication groups. Optionally, the terminal device 152 and the terminal device 153 may each communicate with the terminal device 151 via a link for resource allocation, e.g., an HM link from the CH to the CM and an MH link from the CM and the CH. The terminal device 152 may perform sidelink communication with the terminal device 153 via a sidelink.

It should be noted that, in each of the above system frameworks, the terminal device may be in one of two communication modes, including a first mode and a second mode. Optionally, the first mode may refer to a mode in which a transmission resource of the terminal is allocated by the network device, and the terminal transmits data on the sidelink according to the resource allocated by the network device. Optionally, the network device may allocate a resource for a single transmission to the terminal, or may allocate resources for semi-static transmissions to the terminal. The second mode refers to a mode in which the terminal selects a resource from a resource pool for data transmission. Optionally, the second mode may be further divided into a scenario without a central control node and a scenario with a central control node depending on whether there is a central control node of a non-network-device type.

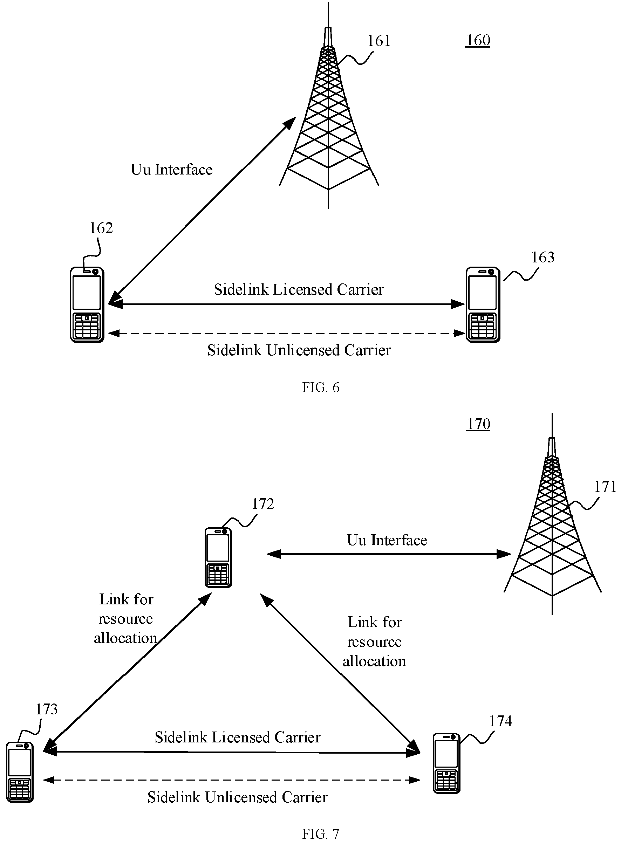

FIG. 6 is an example of a system framework 160 capable of performing dual-carrier sidelink communication according to an embodiment of the present disclosure.

As shown in FIG. 6, the system framework 160 may include a network device 161, a terminal device 162 and a terminal device 163. The network device 161 can be connected to the terminal device 162 via a Uu interface, and the terminal device 162 can perform sidelink communication with the terminal device 163 on a sidelink licensed carrier and a sidelink unlicensed carrier.

FIG. 7 is an example of a system framework 170 capable of performing dual-carrier sidelink communication according to an embodiment of the present disclosure.

As shown in FIG. 7, the system framework 170 may include a network device 171, a terminal device 172, a terminal device 173 and a terminal device 174. The network device 161 can be connected to the terminal device 172 via a Uu interface. The terminal device 172 can perform sidelink communication with the terminal device 173 and the terminal device 174 respectively via a link for resource allocation, and the terminal device 173 can perform sidelink communication with the terminal device 174 on a sidelink licensed carrier and a sidelink unlicensed carrier. In other words, the terminal device 172 can act as a cluster header or a central control node.

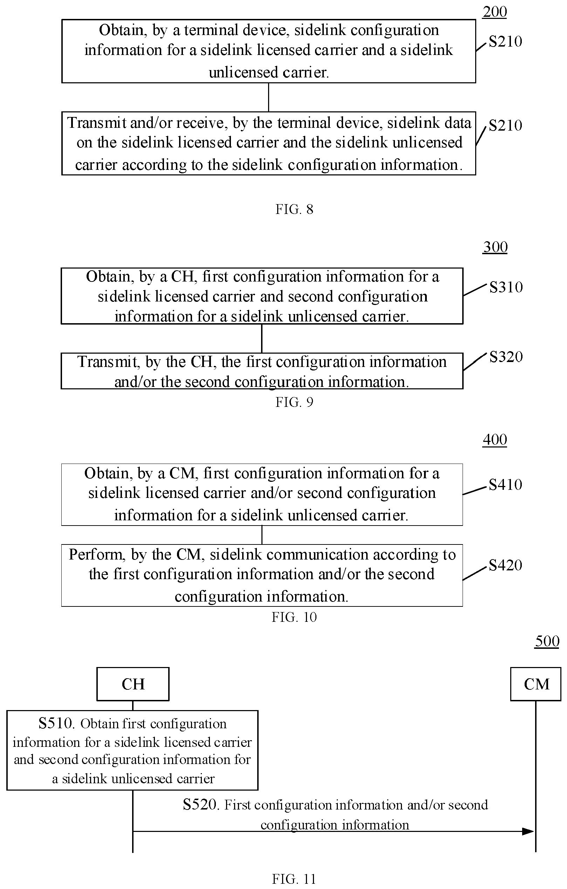

FIG. 8 is a schematic flowchart illustrating a wireless communication method 200 according to an embodiment of the present disclosure. It should be understood that the method 200 may be performed by a terminal device located within a coverage of a network device, or by a terminal device located outside a coverage of a network device, and may be performed by a cluster header or a cluster member.

As shown in FIG. 8, the method 200 may include the following steps.

At S210, a terminal device obtains sidelink configuration information for a sidelink licensed carrier and a sidelink unlicensed carrier.

At S220, the terminal device transmits and/or receives sidelink data on the sidelink licensed carrier and the sidelink unlicensed carrier according to the sidelink configuration information.

For example, the terminal device may perform sidelink communication using the sidelink licensed carrier and the sidelink unlicensed carrier according to the sidelink configuration information.

By obtaining the sidelink configuration information for the sidelink licensed carrier and the sidelink unlicensed carrier, the sidelink licensed carrier and the sidelink unlicensed carrier can be managed coordinately. That is, with the sidelink licensed carrier, the access delay of the unlicensed carrier and the reliability of data transmission on the sidelink unlicensed carrier become controllable, thereby reducing the access delay and improving the reliability of data transmission. Accordingly, the QoS requirement of the service data can be met.

In some embodiments of the present disclosure, the sidelink licensed carrier may refer to a carrier which is usable for sidelink communication and on which the terminal device can access channel resources without channel sensing and/or avoidance, and/or the sidelink unlicensed carrier may refer to a carrier which is usable for sidelink communication and on which the terminal device needs to access channel resources by means of channel sensing and/or avoidance. For example, the sidelink licensed carrier may include a carrier licensed to a certain operator or a carrier dedicated to a specific type of service. For example, the sidelink unlicensed carrier may include a carrier that is licensed to no operator or that is usable for any type of service.

In some embodiments of the present disclosure, S210 may include:
obtaining, by the terminal device, first configuration information on the sidelink licensed carrier.

In some embodiments of the present disclosure, the first configuration information may include information carried on configuration signaling transmitted a network device and/or information carried on sidelink broadcast information transmitted by another terminal device. For example, the first configuration information may include information carried on configuration signaling transmitted by a network device, and the terminal device is capable of transmitting and receiving information on a Uu interface.

In other words, the terminal device may obtain the first configuration information in at least one of the following schemes:
Scheme 1-1-L1: The terminal device obtains the first configuration information on the sidelink licensed carrier by receiving the configuration signaling from the network device. In this case, the terminal needs to have the capability of transmitting and receiving information on the Uu interface.
Scheme 1-1-L2: The terminal device determines the first configuration information by receiving sidelink broadcast information transmitted by another terminal. In this case, the terminal device may not have the capability of transmitting and receiving information on the Uu interface.

In some embodiments of the present disclosure, the first configuration information may be indicated by sidelink broadcast information transmitted by another terminal device on a first carrier. The first carrier and the sidelink licensed carrier are same or different. For example, the terminal device may determine a frequency position of the first carrier and/or a bandwidth of the first carrier according to pre-configuration information.

In some embodiments of the present disclosure, the method may be applied to sidelink unicast communication between two devices, and the terminal device may be any one of the two devices. Alternatively, the method may be applied to sidelink multicast communication between a plurality of devices, and the terminal device may belong to at least one of the plurality of devices.

For example, for two terminals in sidelink unicast communication, at least one of the terminals needs to determine the first configuration information by receiving configuration signaling from a network device. For the plurality of terminals in sidelink multicast communication, at least one of the terminals needs to determine the first configuration information by receiving configuration signaling from a network device. In other words, for the two terminals in the sidelink unicast communication, at least one of the terminals needs to obtain the first configuration information in Scheme 1-1-L1. For the plurality of terminals in the sidelink multicast communication, at least one of the terminals needs to obtain the first configuration information in Scheme 1-1-L1.

In some embodiments of the present disclosure, for sidelink unicast communication and sidelink multicast communication, if the terminals are capable of transmitting and receiving sidelink information on the licensed carrier, in the sidelink unicast communication and sidelink multicast communication, the connections between the terminals can be established by signaling interaction on the sidelink licensed frequency band.

In some embodiments of the present disclosure, S210 may include:
obtaining, by the terminal device, second configuration information on the sidelink unlicensed carrier.

In some embodiments of the present disclosure, the second configuration information may include at least one of:
information carried on configuration signaling transmitted by a network device;
information carried on sidelink broadcast information transmitted by another terminal device;
information obtained by the terminal device by interacting with another terminal device; or
information determined by the terminal device.

In some embodiments of the present disclosure, the second configuration information may be indicated by configuration signaling transmitted by a network device, and the terminal device may be capable of transmitting and receiving information on a Uu interface to obtain the second configuration information.

In some embodiments of the present disclosure, the second configuration information may be determined by the terminal device, and the terminal device may transmit the second configuration information determined by the terminal device to another terminal device.

In other words, the terminal device in the present disclosure may determine the second configuration information in at least one of the following schemes:
Scheme 1-1-U1: The terminal device obtains the second configuration information by receiving configuration signaling from a network device. In this case, the terminal needs to have the capability of transmitting and receiving information on the Uu interface.
Scheme 1-1-U2: The terminal device determines the second configuration information by signaling interaction with one or more terminals.
Scheme 1-1-U3: The terminal device determines the second configuration information according to its own implementation. In this case, the terminal device should transmit a sidelink broadcast message to transmit the determined second configuration information.
Scheme 1-1-U4: The terminal device determines the second configuration information by receiving a sidelink broadcast message transmitted by another terminal.

In some embodiments of the present disclosure, the information carried on the configuration signaling transmitted by the network device includes at least one of: an Absolute Radio Frequency Channel Number (ARFCN) of the sidelink unlicensed carrier, a bandwidth (BW) of the sidelink unlicensed carrier, or a resource pool on the sidelink unlicensed carrier usable by the terminal device for sidelink communication.

For example, the terminal device can determine the information such as the ARFCN and BW of the sidelink unlicensed carrier using Scheme 1-1-U1, so as to better coordinate the resource allocation of the sidelink unlicensed carrier, and determine the information such as the BW, SCS and resource pool of the sidelink unlicensed carrier using Scheme 1-1-U2, Scheme 1-1-U3 or Scheme 1-1-U4, so as to better adapt to the transmission capability of the terminal and service characteristics. In another example, the terminal device can determine the information such as the ARFCN, BW, and resource pool of the sidelink unlicensed carrier using Scheme 1-1-U1, such that the network can further coordinate the resource allocation on the sidelink unlicensed carrier, and determine the configuration information such as the BWP and SCS of the sidelink unlicensed carrier using Scheme 1-1-U2, Scheme 1-1-U3 or Scheme 1-1-U4, so as to better adapt to the transmission capability of the terminal.

Certainly, the terminal device can determine all the sidelink configurations for the sidelink unlicensed carrier using one of Schemes 1-1-U1, 1-1-U2, 1-1-U3, or 1-1-U4.

In some embodiments of the present disclosure, the method 200 may further include:
determining, by the terminal device, Channel Occupation Time (COT) information of another terminal device on the sidelink unlicensed carrier; and
determining, by the terminal device, a channel access scheme for the sidelink unlicensed carrier based on the COT information.

In some embodiments of the present disclosure, the terminal device may determine the COT information based on at least one of:
information transmitted by the other terminal device as received by the terminal device on the sidelink unlicensed carrier; or
information transmitted by the other terminal device as received by the terminal device on a licensed carrier associated with the sidelink unlicensed carrier.

In other words, the terminal device may determine the channel access scheme for the sidelink unlicensed carrier based on the COT information for the sidelink unlicensed carrier transmitted by the other terminal. For example, if the resource is within the COT of the other terminal, the terminal device can access the channel using a 16 us channel sensing scheme, or otherwise it needs to access the channel using a channel sensing scheme with avoidance. For the sidelink unlicensed carrier, the terminal device can determine the COT information for the sidelink unlicensed carrier in one of the following three schemes:
Scheme 1-1-C1: The terminal device determines the COT information by receiving related information transmitted by the other terminal on the licensed carrier associated with the sidelink unlicensed carrier.
Scheme 1-1-C2: The terminal device determines the COT information by receiving related information on the sidelink unlicensed carrier.
Scheme 1-1-C3: The terminal device determines the COT information by receiving related information on the licensed carrier associated with the sidelink unlicensed carrier and on the sidelink unlicensed carrier.

In some embodiments of the present disclosure, the method 200 may further include:
transmitting, by the terminal device, the COT information to the other terminal device via physical layer signaling on a second carrier.

The second carrier may include at least one of: the sidelink unlicensed carrier, an unlicensed carrier associated with the sidelink unlicensed carrier, or a licensed carrier associated with the sidelink unlicensed carrier.

In some embodiments of the present disclosure, a resource for transmitting service data on the second carrier may include an available resource within a time period [t+a, t+b], where t is time at which the terminal device determines the COT information, a or b is a non-negative value. The terminal device transmits the COT information to the other terminal device via the physical layer signaling on the second carrier within the time period [t+a, t+b].

In some embodiments of the present disclosure, a resource for transmitting service data on the second carrier may include no available resource within a time period [t+a, t+b], and the terminal device may trigger a resource selection operation or a resource reselection operation, and/or the terminal device may transmit a Scheduling Request (SR) to a network device, for requesting the network device to allocate a sidelink resource for the terminal device.

In some embodiments of the present disclosure, a or b may be a predetermined value, or a or b may be a pre-configured value.

In some embodiments of the present disclosure, the physical layer signaling may be carried on a Physical Sidelink Control Channel (PSCCH) or a physical sidelink data channel (Physical Sidelink Shared Channel, PSSCH).

In other words, the terminal device can share the COT information on the sidelink unlicensed carrier U in the following schemes:
Scheme 1-1-S1: The terminal device only transmits the COT information via physical layer signaling on the unlicensed carrier associated with the sidelink unlicensed carrier, and the physical layer signaling may be carried on a Physical Sidelink Control Channel (PSCCH), a physical sidelink data channel (Physical Sidelink Shared Channel, PSSCH), or another physical sidelink channel. Preferably, if the terminal device determines the COT information at time t, but within the time period [t+a, t+b], there is no corresponding sidelink transmission resource on the unlicensed carrier associated with the sidelink unlicensed carrier for transmitting the COT information, the terminal device should trigger resource selection or resource reselection, or initiate a Scheduling Request (SR) process to request for the corresponding sidelink resource from the network device. Here, the values of a and b can be configured by the network device, pre-configured, or defined in a standard. For example, if within the time period [t+a, t+b] there is a sidelink resource on the unlicensed carrier associated with the sidelink unlicensed carrier that can carry the COT information, then the terminal device can randomly select a resource within a specific time-frequency resource range within the range of [t+a, t+b] on the associated licensed carrier for transmitting the COT information.
Scheme 1-1-S2: The terminal device only transmits the COT information via physical layer signaling on the sidelink licensed carrier associated with the sidelink unlicensed carrier, and the physical layer signaling may be carried on a Physical Sidelink Control Channel (PSCCH), a physical sidelink data channel (Physical Sidelink Shared Channel, PSSCH), or another physical sidelink channel. Preferably, if the terminal device determines the COT information at time t, but within the time period [t+a, t+b], there is no corresponding sidelink transmission resource on the licensed carrier associated with the sidelink unlicensed carrier for transmitting the COT information, the terminal device should trigger resource selection or resource reselection, or initiate a Scheduling Request (SR) process to request for the corresponding sidelink resource from the network device. Here the values of a and b can be configured by the network device, pre-configured, or defined in a standard. For example, if within [t+a, t+b] there is a sidelink resource on the licensed carrier associated with the sidelink unlicensed carrier that can carry the COT information, then the terminal device can randomly select a resource within a specific time-frequency resource range within the range of [t+a, t+b] on the associated licensed carrier for transmitting the COT information.

Compared with Scheme 1-1-S1, in Scheme 1-1-S2, even if the terminal device has no data service to transmit at the time when determining the COT information, it can still use less time-frequency resource to transmit the COT information on the licensed carrier. In contrast, transmitting the COT information on the sidelink unlicensed carrier needs to meet a Channel Occupancy Bandwidth (COB) requirement, and requires much more time-frequency resource than transmitting on the licensed carrier.

Scheme 1-1-S3: The terminal device only transmits the COT information via physical layer signaling on the sidelink unlicensed carrier, and the physical layer signaling may be carried on a Physical Sidelink Control Channel (PSCCH), a physical sidelink data channel (Physical Sidelink Shared Channel, PSSCH), or another physical sidelink channel. This scheme is suitable for the situation where the terminal device has a data service that need to be transmitted just at the time when determining the COT information. Moreover, if there is a terminal incapable of receiving sidelink information on the sidelink licensed carrier, this scheme can ensure that such terminal can still obtain the COT information.

Scheme 1-1-S4: After the terminal device determines the COT information at time t, if there is a sidelink transmission resource on the sidelink unlicensed carrier or the licensed carrier associated with the sidelink unlicensed carrier within the time range of [t+a, t+b] that can carry the COT information, the terminal device transmits the COT information on the first available sidelink resource after t. Otherwise, the terminal device should trigger resource selection or resource reselection on the licensed carrier, or initiate a Scheduling Request (SR) process to request for the corresponding sidelink resource from the network device. This scheme is suitable to reduce resource selection or resource reselection triggered by COT sharing.

In some embodiments of the present disclosure, the method 200 may further include:
receiving or transmitting, by the terminal device, a Sidelink Synchronization Signal and Sidelink Broadcast Channel Block (S-SSB).

In some embodiments of the present disclosure, when the terminal device is capable of transmitting and receiving information on a Uu interface, the terminal device may use a network device as a synchronization source, and transmit the S-SSB on the sidelink licensed carrier and/or the sidelink unlicensed carrier according to a configuration from the network device. Alternatively, when the terminal device is incapable of transmitting and receive information on the Uu interface and capable of receiving information on the sidelink licensed carrier, the terminal device may receive the S-SSB on the sidelink licensed carrier. Altematively, when the terminal device is only capable of receiving information on the sidelink unlicensed carrier, the terminal device may receive the S-SSB on the sidelink unlicensed carrier.

In other words, for a terminal that performs sidelink communication on the sidelink licensed carrier and the sidelink unlicensed carrier, if the capability of receiving on the Uu interface is supported, the terminal may use the network device as its synchronization source on both the sidelink licensed carrier and the sidelink unlicensed carrier. The terminal device can transmit a Sidelink Synchronization Signal and Sidelink Broadcast Channel Block (S-SSB) on the sidelink licensed carrier or the sidelink unlicensed carrier according to the configuration from the network device or pre-configuration. A terminal that does not support receiving on the Uu interface but supports receiving on the sidelink licensed carrier can receive the S-SSB on the sidelink licensed carrier and use it as a reference synchronization source for the sidelink licensed carrier and the sidelink unlicensed carrier. A terminal that supports receiving on the sidelink unlicensed carrier only can receive the S-SSB on the sidelink unlicensed carrier and use it as a reference synchronization source on the sidelink unlicensed carrier.

In some embodiments of the present disclosure, a transmission period of the S-SSB on the sidelink unlicensed carrier may be greater than a transmission period of the S-SSB on the sidelink licensed carrier.

In other words, the terminal device can transmit the S-SSB on the sidelink licensed carrier only, on the sidelink unlicensed carrier only, or on both the sidelink licensed carrier and the sidelink unlicensed carrier. If the S-SSB is transmitted on the sidelink licensed carrier and the sidelink unlicensed carrier, preferably, the transmission period on the sidelink unlicensed carrier should be greater than that on the sidelink licensed carrier. Therefore, the S-SSB on the sidelink unlicensed carrier only provides synchronization information for terminals incapable of receiving on the sidelink licensed carrier, and the number and service delay sensitivity of such terminals are very low. Accordingly, the utilization of the S-SSB can be improved. If the terminal device transmits the S-SSB on the sidelink licensed carrier, the configuration information of the sidelink unlicensed carrier as determined by the network device may be indicated in the PSBCH.

In some embodiments of the present disclosure, the method 200 may further include:
obtaining, by the terminal device, first association information including an unlicensed carrier associated with the sidelink licensed carrier.

In some embodiments of the present disclosure, the first association information may include bandwidth information of the unlicensed carrier and timing information of the unlicensed carrier. In some embodiments of the present disclosure, the first association information may be pre-configuration information, or the first association information may be information transmitted by the terminal device via a Physical Sidelink Broadcast Channel (PSBCH).

In some embodiments of the present disclosure, the method 200 may further include:
receiving, by the terminal device, configuration information of the unlicensed carrier transmitted by a network device.

For example, if the terminal device transmits the S-SSB on the sidelink licensed carrier, the sidelink licensed carrier may be associated with one or more unlicensed carriers, and the association may be indicated in a PSBCH transmitted by the terminal device or may be pre-configuration information. Additionally, the PSBCH may indicate timing information and bandwidth information for the associated sidelink unlicensed carrier.

In some embodiments of the present disclosure, S220 may include:
transmitting, by the terminal device, a Physical Sidelink Shared Channel (PSSCH) on the sidelink unlicensed carrier; and
transmitting, by the terminal device, Hybrid Automatic Repeat reQuest (HARQ) feedback information corresponding to the PSSCH on the sidelink licensed carrier.

In some embodiments of the present disclosure, a physical resource corresponding to the HARQ feedback information may be a resource determined based on a time-frequency resource of the PSSCH and information on a carrier on which the PSSCH is located. Optionally, the Physical Sidelink Control Channel (PSCCH) transmitted on the sidelink licensed carrier is used to schedule the resource corresponding to the Physical Sidelink Shared Channel (PSSCH) on the unlicensed carrier associated with the sidelink licensed carrier, and the PSCCH includes an identifier of the unlicensed carrier. In some embodiments of the present disclosure, the Physical Sidelink Control Channel (PSCCH) transmitted on the sidelink unlicensed carrier is used to schedule the resource corresponding to the Physical Sidelink Shared Channel (PSSCH) on the licensed carrier associated with the sidelink unlicensed carrier, and the PSCCH includes an identifier of the sidelink licensed carrier.

In other words, there is a HARQ feedback between a receiving terminal and a transmitting terminal. Optionally, for the PSSCH transmitted on the sidelink unlicensed carrier, its corresponding HARQ feedback information can be transmitted on the sidelink licensed carrier, and the physical resource used to carry the HARQ feedback information may be determined based on at least the time-frequency resource of the PSSCH, and the information on the carrier where it is located. Optionally, the PSCCH transmitted on the sidelink licensed carrier can schedule transmission of the PSSCH on the sidelink unlicensed carrier associated with the sidelink licensed carrier. In this case, the PSCCH should indicate the ID of the scheduled sidelink unlicensed carrier, or vice versa.

In some embodiments of the present disclosure, a resource selected by the terminal device on the sidelink licensed carrier or a resource scheduled by a network device on the sidelink licensed carrier may only be used to transmit or receive sidelink data having a priority higher than a first threshold or a delay requirement lower than a second threshold. Optionally, the first threshold or the second threshold may be predetermined, or the first threshold or the second threshold may be a threshold configured by a network device. In other words, the terminal device can only use the resource it selects autonomously or the resource scheduled by the network device on the sidelink licensed carrier to transmit sidelink data with a priority higher than P or a delay requirement lower than T, where the value of P or T is defined in a standard, configured by the network device, or pre-configured.

In some embodiments of the present disclosure, the sidelink unlicensed carrier and the sidelink licensed carrier may be used for receiving or transmitting transmission data in different orders for same data, respectively. For example, for a Transport Block (TB) transmitted on the sidelink unlicensed carrier, its corresponding retransmission may be transmitted on the sidelink licensed carrier, or vice versa.

In some embodiments of the present disclosure, the sidelink configuration information may include at least one of:
an Absolute Radio Frequency Channel Number (ARFCN) of a sidelink carrier, a bandwidth (BW) of the sidelink carrier, Bandwidth Part (BWP) configuration information of the sidelink carrier, a Subcarrier Spacing (SCS) of a BWP of the sidelink carrier, a sidelink communication resource pool usable by the terminal device on the sidelink carrier, or a resource corresponding to a Sidelink Synchronization Signal and Sidelink Broadcast Channel Block (S-SSB) on the sidelink carrier.

In some embodiments of the present disclosure, the sidelink configuration information may further include an Absolute Radio Frequency Channel Number (ARFCN) of an unlicensed carrier associated with the sidelink licensed carrier and a bandwidth of the unlicensed carrier.

FIG. 9 is a schematic flowchart illustrating a wireless communication method 300 according to an embodiment of the present disclosure. It should be understood that the method 300 may be performed by a terminal device located within a coverage of a network device, or may be performed by a Cluster Header (CH).

As shown in FIG. 9, the method 300 may include the following steps.

At S310, a CH obtains first configuration information for a sidelink licensed carrier and second configuration information for a sidelink unlicensed carrier.

At S320, the CH transmits the first configuration information and/or the second configuration information.

For example, after obtaining the first configuration information and the second configuration information, the CH transmits the first configuration information and/or the second configuration information to a CM.

In some embodiments of the present disclosure, the first configuration information and/or the second configuration information may be information configured by a network device.

In some embodiments of the present disclosure, in the method 300, the sidelink unlicensed carrier may include one or more unlicensed carriers associated with the sidelink licensed carrier.

In some embodiments of the present disclosure, the second configuration information may be configuration information transmitted by a network device, or the second configuration information may be information determined by the CH. Optionally, the second configuration information may include at least one of: an Absolute Radio Frequency Channel Number (ARFCN) of the unlicensed carrier, a bandwidth (BW) of the unlicensed carrier, Bandwidth Part (BWP) configuration information of the unlicensed carrier, a Subcarrier Spacing (SCS) of a BWP of the unlicensed carrier, or a sidelink communication resource pool usable by the terminal device on the unlicensed carrier.

For example, if the configuration information of the sidelink licensed carrier determined by the CH by receiving configuration signaling from the network device includes the ARFCN(s) and corresponding bandwidth(s) of the above one or more unlicensed carriers associated with the sidelink licensed carrier, the CH may further receive configuration information from the network device to determine other configuration information of the one or more unlicensed carriers. Altematively, the CH may determine other configuration information of the one or more sidelink unlicensed carriers based on its own implementation or pre-configuration information. If the configuration information of the sidelink licensed carrier determined by the CH by receiving the configuration signaling from the network device does not include the ARFCN(s) and corresponding bandwidth(s) of the above one or more unlicensed carriers associated with the sidelink licensed carrier, the CH can determine the ARFCN(s), the corresponding bandwidth(s), and other configuration information of the one or more unlicensed carriers associated with the sidelink licensed carrier based on its own implementation or pre-configuration information. The above other configuration information includes at least one of BWP, SCS, or resource pool configuration of the sidelink unlicensed carrier.

In some embodiments of the present disclosure, the CH transmitting the first configuration information and/or the second configuration information may include:
transmitting, by the CH, the first configuration information and/or the second configuration information on the sidelink licensed carrier;
transmitting, by the CH, the first configuration information and/or the second configuration information on the sidelink unlicensed carrier; or
transmitting, by the CH, the first configuration information and/or the second configuration information on the sidelink licensed carrier and the sidelink unlicensed carrier.

For example, in the present disclosure, the CH may transmit configuration information in one of the following schemes:
Scheme 2-2-C1: The CH transmits the first configuration information and/or the second configuration information on the sidelink licensed carrier only.
Scheme 2-2-C2: The CH transmits the first configuration information and/or the second configuration information on the sidelink unlicensed carrier only.
Scheme 2-2-C3: The CH transmits the first configuration information and/or the second configuration information on the sidelink licensed carrier and the sidelink unlicensed carrier.

In some embodiments of the present disclosure, the second configuration information may be carried on a physical channel, and a resource occupied by the physical channel is a time-frequency resource on a first licensed carrier. Optionally, the physical channel may be a Physical Sidelink Broadcast Channel (PSBCH), or the physical channel may be a channel different from the PSBCH. Optionally, a time-frequency resource on the first licensed carrier may be a resource of a Sidelink Synchronization Signal and Sidelink Broadcast Channel Block (S-SSB), or the time-frequency resource on the first licensed carrier may be a resource determined based on the resource of the S-SSB.

For example, if the CH transmits the second configuration information according to Scheme 2-2-C1 or Scheme 2-2-C2, then preferably the physical channel carrying the second configuration information occupies a specific resource on the sidelink licensed carrier or the sidelink unlicensed carrier. For example, the second configuration information may be carried on a PSBCH and transmitted in an S-SSB resource. Alternatively, the second configuration information may be carried on a sidelink broadcast channel different from the PSBCH, and the sidelink broadcast channel occupies a time-frequency resource that can be uniquely determined with reference to the time-frequency resource position of the S-SSB. Altematively, the second configuration information may be carried on a sidelink broadcast channel different from the PSBCH, and the broadcast channel occupies a fixed time-frequency resource within a specific period. In this case, preferably, the CH may use the network device or a Global Navigation Satellite System (GNSS) as the reference synchronization source according to the configuration from the network device or pre-configuration information.

In another example, if the CH transmits the second configuration information according to Scheme 2-2-C3, then on the sidelink licensed carrier and the sidelink unlicensed carrier, the resource occupied by the physical channel carrying the configuration information can be the same as that of Scheme 2-2-C1 and Scheme 2-2-C2, respectively.

In some embodiments of the present disclosure, the method 300 may further include:
determining, by the CH, a scheme for transmitting the first configuration information and/or the second configuration information.

In some embodiments of the present disclosure, the scheme for transmitting the first configuration information and/or the second configuration information may be predetermined, information pre-configured by a network device, or information determined by the CH.

In some embodiments of the present disclosure, the method 300 may further include:
transmitting, by the CH, a Sidelink Synchronization Signal and Sidelink Broadcast Channel Block (S-SSB).

In some embodiments of the present disclosure, when all Cluster Members (CMs) are capable of transmitting and receiving information on a Uu interface, the CH may use a network device as a synchronization source, and not transmit the S-SSB on the sidelink licensed carrier and/or the sidelink unlicensed carrier. Altematively, when a CM is incapable of receiving on the Uu interface but is capable of receiving information on the sidelink licensed carrier, the CH may transmit the S-SSB to the CM on the sidelink licensed carrier. Altematively, when a CM is only capable of receiving information on the sidelink unlicensed carrier, the CH may transmit the S-SSB to the CM on the sidelink unlicensed carrier.

In some embodiments of the present disclosure, a transmission period of the S-SSB on the sidelink unlicensed carrier may be greater than a transmission period of the S-SSB on the sidelink licensed carrier.

For example, if the CH transmits the first configuration information and/or the second configuration information according to Scheme 2-2-C1, the CH may not transmit the S-SSB on the sidelink carrier according to an indication from the network device, a pre-configuration or its own implementation. In this case, both the CH and the CM have the capability of receiving on Uu interface or the capability of receiving from GNSS, and both can use the network device or GNSS as the reference synchronization source. Alternatively, the CH may transmit the S-SSB on the sidelink carrier according to an indication from the network device, a pre-configuration or its own implementation, so as to provide synchronization information for terminals that do not have the capability of receiving on Uu interface but have the capability of receiving sidelink information on the sidelink licensed carrier.

In another example, if the configuration information is transmitted according to Scheme 2-2-C2, then preferably the CH should transmit the S-SSB on the sidelink unlicensed carrier.

In another example, if Scheme 2-2-C3 is used, the CH shall at least transmit the S-SSB on the sidelink unlicensed carrier. If the CH transmits the S-SSB on the sidelink licensed carrier and the sidelink unlicensed carrier, then preferably the S-SSB transmission period on the sidelink unlicensed carrier is greater than the S-SSB transmission period on the sidelink licensed carrier. In this case, the scheme of determining whether the CH transmits the S-SSB on the sidelink licensed carrier is the same as when the CH transmits the configuration information according to Scheme 2-2-C1.

In some embodiments of the present disclosure, the method 300 may further include:
transmitting, by the CH, scheduling information or receiving sidelink feedback information according to the first configuration information, the scheduling information being used to schedule sidelink data; and/or
transmitting, by the CH, the scheduling information or receiving the sidelink feedback information according to the second configuration information.

In some embodiments of the present disclosure, the scheduling information may be used to schedule a Cluster Member (CM) to transmit or receive the sidelink data on the sidelink licensed carrier and/or the sidelink unlicensed carrier.

For example, the CH may transmit SCI for scheduling sidelink transmission of the CM. The PSCCH carrying the above SCI is transmitted on the sidelink licensed carrier or the sidelink unlicensed carrier, and the SCI contains ID information of the sidelink carrier where the scheduled sidelink transmission is located.

In some embodiments of the present disclosure, a resource set corresponding to the sidelink data may be a resource configured by a network device or the CH. For example, the resource set may be at least one of a plurality of resource pools configured by the network device on the sidelink licensed carrier; or the resource set may be a subset of one resource pool configured by the network device on the sidelink licensed carrier, the subset including all time slots and a part of frequency domain resources in the one resource pool.

For example, the scheduled sidelink data transmission may be on the sidelink licensed carrier or on the sidelink unlicensed carrier. For example, on the sidelink licensed carrier, the sidelink transmission resource for the sidelink data transmission may belong to a resource set configured by a network device or the CH. The resource set may be one of a plurality of resource pools configured by the network device on the sidelink licensed carrier, or the resource set may be a subset of a resource pool configured by the network device. Preferably, the subset includes all time slots in the resource pool, but only a part of frequency domain resources in the resource pool.

In some embodiments of the present disclosure, the scheduling information is carried in Sidelink Control Information (SCI). The SCI includes a first identifier and a second identifier. The first identifier identifies a source terminal transmitting a Physical Sidelink Shared Channel (PSSCH) according to the scheduling information, and the second identifier identifies at least one target terminal receiving the PSSCH according to the scheduling information.

For example, a source terminal ID and a target terminal ID may be indicated in the SCI. The terminal corresponding to the source terminal ID should transmit the PSSCH according to the scheduling information of the SCI, and the target ID may correspond to one or more terminals that should receive the PSSCH according to the scheduling information of the SCI.

In some embodiments of the present disclosure, a resource scheduled by the scheduling information may be located on the sidelink licensed carrier, and a resource scheduled by the scheduling information may only be used by the CM to transmit or receive data having a priority higher than a third threshold or a delay requirement lower than a fourth threshold. Optionally, the third threshold or the fourth threshold may be predetermined; or the third threshold or the fourth threshold may be a threshold configured by a network device or the CH.

In some embodiments of the present disclosure, the sidelink feedback information may include Hybrid Automatic Repeat reQuest (HARQ) feedback information.

In some embodiments of the present disclosure, the sidelink feedback information may be carried on a physical channel, and a physical resource occupied by the physical channel on the sidelink licensed carrier may be a resource determined based on the scheduling information and/or a time-frequency resource of the sidelink data.

For example, for the transmitted SCI for scheduling a sidelink transmission, the CH may further receive the HARQ feedback information from the terminal corresponding to the target ID on the sidelink licensed carrier, and the physical resource occupied by the physical channel carrying the HARQ feedback information on the sidelink licensed carrier may be determined from the time-frequency resource of the SCI, or determined according to the time-frequency resource where the sidelink data transmission scheduled by the SCI is located.

In some embodiments of the present disclosure, the scheduling information may be used to schedule the CM to transmit or receive transmission data in different orders for same data on the sidelink unlicensed carrier and the sidelink licensed carrier, respectively.

For example, for a sidelink TB scheduled on one carrier, the CH may schedule retransmission of the TB on a different carrier.

In some embodiments of the present disclosure, the method 300 may further include:
transmitting or receiving, by the CH, Channel Occupation Time (COT) information.

For example, the CH can share the COT information with the CM, and can also use the COT information shared by the CM. Preferably, the CH or the CM transmits the shared COT information on the sidelink licensed carrier. The CH may transmit the shared COT information using Scheme 1-1-S1, Scheme 1-1-S2, Scheme 1-1-S3, or Scheme 1-1-S4. In addition, the CH can indicate the shared COT information in the SCI scheduling the sidelink data transmission. In addition, the CH can use the COT information shared by the CM to determine an access scheme for the sidelink unlicensed carrier.

In some embodiments of the present disclosure, the method 300 may further include:
determining, by the CH, an access scheme for the unlicensed carrier based on the COT information.

In some embodiments of the present disclosure, the CH may access the unlicensed carrier according to a first access scheme when a transmission resource of the sidelink data is located within a COT range indicated by the COT information, or the CH may access the unlicensed carrier according to a second access scheme when the transmission resource of the sidelink data is located outside the COT range indicated by the COT information. The first access scheme requires less time than the second access scheme. Optionally, the first access scheme and/or the second access scheme may be predetermined.

In some embodiments of the present disclosure, the method 200 may further include:
receiving or transmitting, by the CH, sidelink data on a resource selected by a Cluster Member (CM).

In some embodiments of the present disclosure, the resource selected by the CM may be located on the sidelink licensed carrier, and the resource selected by the CM may only be used by the CM to transmit data having a priority higher than a fifth threshold or a delay requirement lower than a sixth threshold. Optionally, the fifth threshold or the sixth threshold may be predetermined; or the fifth threshold or the sixth threshold may be a threshold configured by a network device or the CH.

In some embodiments of the present disclosure, the first configuration information may include at least one of:
an Absolute Radio Frequency Channel Number (ARFCN) of a sidelink carrier, a bandwidth (BW) of the sidelink carrier, Bandwidth Part (BWP) configuration information of the sidelink carrier, a Subcarrier Spacing (SCS) of a BWP of the sidelink carrier, a sidelink communication resource pool usable by the terminal device on the sidelink carrier, or a resource corresponding to a Sidelink Synchronization Signal and Sidelink Broadcast Channel Block (S-SSB) on the sidelink carrier.

In some embodiments of the present disclosure, the sidelink configuration information further may include an Absolute Radio Frequency Channel Number (ARFCN) of an unlicensed carrier associated with the sidelink licensed carrier and a bandwidth of the unlicensed carrier.

It should be understood that for the steps in the method 300, reference can be made to the corresponding steps in the above method 200, and details thereof will be omitted here.

FIG. 10 is a schematic flowchart illustrating a wireless communication method 400 according to an embodiment of the present disclosure. It should be understood that the method 400 may be performed by a terminal device located out of the coverage of a network device, or may be performed by a Cluster Member (CM).

As shown in FIG. 10, the method 400 may include the following steps.

It should be understood that, for the steps in the method 300, reference may be made to the corresponding steps in the above method 200 or method 300, and details thereof will be omitted here.

At S410, a CM obtains first configuration information for a sidelink licensed carrier and/or second configuration information for a sidelink unlicensed carrier.

At S420, the CM performs sidelink communication according to the first configuration information and/or the second configuration information.

For example, the CM may obtain the first configuration information and/or the second configuration information transmitted by a network device or a CH, and then perform sidelink communication according to the first configuration information and/or the second configuration information.

In some embodiments of the present disclosure, the first configuration information and/or the second configuration information may be information configured by a network device.

In some embodiments of the present disclosure, in the method 400, the sidelink unlicensed carrier may include one or more unlicensed carriers associated with the sidelink licensed carrier.

In some embodiments of the present disclosure, the second configuration information may be configuration information transmitted by a network device, or the second configuration information may be information determined by a Cluster Header (CH). In some embodiments of the present disclosure, the second configuration information may include at least one of: an Absolute Radio Frequency Channel Number (ARFCN) of the unlicensed carrier, a bandwidth (BW) of the unlicensed carrier, Bandwidth Part (BWP) configuration information of the unlicensed carrier, a Subcarrier Spacing (SCS) of a BWP of the unlicensed carrier, or a sidelink communication resource pool usable by the terminal device on the unlicensed carrier.

In some embodiments of the present disclosure, S410 may include:
receiving, by the CM, the first configuration information and/or the second configuration information on the sidelink licensed carrier;
receiving, by the CM, the first configuration information and/or the second configuration information on the sidelink unlicensed carrier; or
receiving, by the CM, the first configuration information and/or the second configuration information on the sidelink licensed carrier and the sidelink unlicensed carrier.

In some embodiments of the present disclosure, the second configuration information may be carried on a physical channel, and a resource occupied by the physical channel may be a time-frequency resource on a first licensed carrier. In some embodiments of the present disclosure, the physical channel may be a Physical Sidelink Broadcast Channel (PSBCH), or the physical channel may be a channel different from the PSBCH. In some embodiments of the present disclosure, a time-frequency resource on the first licensed carrier may be a resource of a Sidelink Synchronization Signal and Sidelink Broadcast Channel Block (S-SSB), or the time-frequency resource on the first licensed carrier may be a resource determined based on the resource of the S-SSB.

For example, for a CM having the capability of receiving on the sidelink licensed carrier, it can receive the configuration signaling from the network device to obtain the first configuration information. In this case, the CM should have the capability of receiving on Uu interface. For example, the CM determines the information such as ARFCN and bandwidth of the sidelink licensed carrier based on pre-configuration, detects the S-SSB transmitted by the CH on the sidelink licensed carrier to synchronize with the CH, and then receives the information transmitted by the CH to determine other configuration information of the sidelink licensed carrier. The other sidelink configuration information on the sidelink licensed carrier includes at least one of: an Absolute Radio Frequency Channel Number (ARFCN) of the sidelink licensed carrier, a bandwidth (BW) of the sidelink licensed carrier, a Bandwidth Part (BWP) configuration of the sidelink licensed carrier, a Subcarrier Spacing (SCS) of the BWP of the sidelink licensed carrier, a sidelink communication resource pool usable by the terminal device on the sidelink licensed carrier, a transmission resource for Sidelink Synchronization Signal Block (S-SSB) on the sidelink licensed carrier, or ARFCN(s) and corresponding bandwidth(s) of one or more associated sidelink unlicensed carriers.

In addition, the CM may determine all sidelink configurations for one or more unlicensed carriers associated with a certain sidelink licensed carrier by receiving configuration information from the network device, which may include at least one of: ARFCN(s) and corresponding bandwidth(s) of one or more associated sidelink unlicensed carrier, a BWP, an SCS, or a resource pool configuration of the sidelink unlicensed carrier. Altematively, the CM may determine all sidelink configurations for one or more sidelink unlicensed carriers associated with the sidelink licensed carrier by receiving signaling transmitted by the CH on the sidelink licensed carrier. In this case, the CM has the capability of receiving sidelink information on the sidelink licensed carrier. Altematively, the CM may determine ARFCN(s) and corresponding bandwidth(s) of one or more sidelink unlicensed carriers based on pre-configuration information, detect the S-SSB transmitted by the CH on the one or more sidelink unlicensed carriers to synchronize with the CH, and then further receive the signaling transmitted by the CH to determine other configuration information of the sidelink unlicensed carrier. The other configuration information includes at least one of a BWP, an SCS, or a resource pool configuration of the sidelink unlicensed carrier.

In some embodiments of the present disclosure, the method 400 may further include:
determining, by the CM, a scheme for receiving the first configuration information and/or the second configuration information.

In some embodiments of the present disclosure, the scheme for receiving the first configuration information and/or the second configuration information may be predetermined, information pre-configured by a network device, or information determined by a Cluster Header (CH).

In some embodiments of the present disclosure, the method 400 may further include:
receiving, by the CM, a Sidelink Synchronization Signal and Sidelink Broadcast Channel Block (S-SSB).

In some embodiments of the present disclosure, when all CMs are capable of transmitting and receiving information on a Uu interface, the CM may use a network device as a synchronization source, and not receive the S-SSB on the sidelink licensed carrier and/or the sidelink unlicensed carrier. Alternatively, when the CM is incapable of receiving on the Uu interface but is capable of receiving information on the sidelink licensed carrier, the CM may receive the S-SSB on the sidelink licensed carrier. Altematively, when the CM is only capable of receiving information on the sidelink unlicensed carrier, the CM may receive the S-SSB on the sidelink unlicensed carrier.

In some embodiments of the present disclosure, a transmission period of the S-SSB on the sidelink unlicensed carrier may be greater than a transmission period of the S-SSB on the sidelink licensed carrier.

In some embodiments of the present disclosure, the CM may receive scheduling information or transmit sidelink feedback information according to the first configuration information, the scheduling information being used to schedule sidelink data; and/or the CM may receive the scheduling information or transmit the sidelink feedback information according to the second configuration information.

In some embodiments of the present disclosure, the scheduling information may be used to schedule the CM to transmit or receive the sidelink data on the sidelink licensed carrier and/or the sidelink unlicensed carrier.

In some embodiments of the present disclosure, a resource set corresponding to the sidelink data may be a resource configured by a network device or the CH.

In some embodiments of the present disclosure, the resource set may be at least one of a plurality of resource pools configured by the network device on the sidelink licensed carrier; or the resource set may be a subset of one resource pool configured by the network device on the sidelink licensed carrier, the subset including all time slots and a part of frequency domain resources in the one resource pool.

In other words, the CM may transmit the sidelink data on the sidelink licensed carrier, or transmit the sidelink data on the sidelink unlicensed carrier. If it is on the sidelink licensed carrier, the sidelink transmission resource used for the sidelink data transmission belongs to a resource set, and the CM receives configuration signaling from the network device or the CH to determine the resource set. For example, the resource set may be one of a plurality of resource pools configured by the network device on the sidelink licensed carrier. Altematively, the resource set may be a subset of one resource pool configured by the network device. Preferably, the subset includes all time slots in the resource pool, but includes a part of frequency domain resources in the resource pool.

In some embodiments of the present disclosure, the scheduling information may be carried in Sidelink Control Information (SCI). The SCI includes a first identifier and a second identifier. The first identifier identifies a source terminal transmitting a Physical Sidelink Shared Channel (PSSCH) according to the scheduling information, and the second identifier identifies at least one target terminal receiving the PSSCH according to the scheduling information.

For example, the CM may determine a transmitting terminal for which the scheduling information in the SCI is provided according to a source terminal ID indicated in the SCI. Specifically, if the source terminal ID is the same as the ID of the CM, the CM transmits the PSSCH according to the scheduling information of the SCI. In another example, the CM may determine a receiving terminal for which the scheduling information in the SCI is provided according to a target ID indicated in the SCI. Specifically, if the target ID indicated in the SCI is the same as the ID of the CM, the CM should receive the sidelink data transmitted by another terminal at the time-frequency resource position indicated by the SCI.

In some embodiments of the present disclosure, a resource scheduled by the scheduling information may be located on the sidelink licensed carrier, and a resource scheduled by the scheduling information may only be used by the CM to transmit or receive data having a priority higher than a third threshold or a delay requirement lower than a fourth threshold. In some embodiments of the present disclosure, the third threshold or the fourth threshold may be predetermined; or the third threshold or the fourth threshold may be a threshold configured by a network device or the CH.

For example, the CM may receive the SCI transmitted by the CH on the sidelink licensed carrier, and transmit the sidelink data on the corresponding carrier according to the scheduling information carried in the SCI. Preferably, the above SCI may include ID information of the sidelink carrier where the scheduled sidelink transmission is located. If the sidelink transmission scheduled by the SCI is located on the sidelink licensed carrier, then preferably the scheduled CM can only use the scheduled resource to transmit the sidelink data having a priority higher than P or a delay requirement lower than T, where the values of P or T are defined in a standard, configured by the network device or CH, or pre-configured.

In some embodiments of the present disclosure, the sidelink feedback information may include Hybrid Automatic Repeat reQuest (HARQ) feedback information.

For example, for the received SCI for scheduling the sidelink transmission, the CM can further feed back HARQ feedback information to the CH on the sidelink licensed carrier, and the physical resource occupied by the physical channel carrying the HARQ feedback information on the sidelink licensed carrier can be determined based on the time-frequency resource of the SCI, or based on the time-frequency resource where the sidelink data transmission scheduled by the SCI is located.

In some embodiments of the present disclosure, the sidelink feedback information may be carried on a physical channel, and a physical resource occupied by the physical channel on the sidelink licensed carrier may be a resource determined based on the scheduling information and/or a time-frequency resource of the sidelink data.

In some embodiments of the present disclosure, the scheduling information may be used to schedule the CM to transmit or receive transmission data in different orders for same data on the sidelink unlicensed carrier and the sidelink licensed carrier, respectively. For example, for a sidelink TB scheduled on a carrier, the CM may transmit a retransmission of the TB on another different carrier according to the scheduling instruction from the CH.

In some embodiments of the present disclosure, the method 400 may further include:
transmitting or receiving, by the CM, Channel Occupation Time (COT) information.

In some embodiments of the present disclosure, the method 400 may further include:
determining, by the CM, an access scheme for the unlicensed carrier based on the COT information.

In some embodiments of the present disclosure, the CM may access the unlicensed carrier according to a first access scheme when a transmission resource of the sidelink data is located within a COT range indicated by the COT information, or the CM may access the unlicensed carrier according to a second access scheme when the transmission resource of the sidelink data is located outside the COT range indicated by the COT information. The first access scheme requires less time than the second access scheme.

In some embodiments of the present disclosure, the first access scheme and/or the second access scheme may be predetermined.

For example, the CM may determine the access scheme for the sidelink unlicensed carrier according to the shared COT information transmitted by the CH or another CM. Specifically, if the sidelink transmission resource determined by the CM according to the above SCI indication information is located on the sidelink unlicensed carrier, and is located within the COT range indicated by the CH or a certain CM, then the CM can access the unlicensed carrier according to the first access scheme. On the contrary, if the sidelink transmission resource determined by the CM according to the above SCI indication information is located on the sidelink unlicensed carrier, but is not within the COT range shared by the CH or a certain CM, the unlicensed carrier can be accessed according to the second access scheme. The first access scheme and the second access scheme are defined in a standard, and the first access scheme requires less time than the second access scheme.

In addition, the CM can also share the COT information with the CH or another CM. Preferably, the CM may transmit the COT information on the sidelink licensed carrier. The CM may transmit the COT information using Scheme 1-1-S1, Scheme 1-1-S2, Scheme 1-1-S3 or Scheme 1-1-S4.

In some embodiments of the present disclosure, the method 400 may further include:
receiving or transmitting, by the CM, sidelink data on a resource selected by the CM.

In some embodiments of the present disclosure, the resource selected by the CM may be located on the sidelink licensed carrier, and the resource selected by the CM may be used by the CM to transmit or receive data having a priority higher than a fifth threshold or a delay requirement lower than a sixth threshold. In some embodiments of the present disclosure, the fifth threshold or the sixth threshold may be predetermined; or the fifth threshold or the sixth threshold may be a threshold configured by a network device or the CH. For example, the CM can autonomously select a resource on the sidelink licensed carrier for sidelink transmission. Preferably, the CM may use the autonomously selected resource on the sidelink licensed carrier for transmitting sidelink data having a priority higher than P or a delay requirement lower than T, where the values of P or T are defined in a standard, configured by a network device or the CH, or pre-configured.

In some embodiments of the present disclosure, the first configuration information may include at least one of:
an Absolute Radio Frequency Channel Number (ARFCN) of a sidelink carrier, a bandwidth (BW) of the sidelink carrier, Bandwidth Part (BWP) configuration information of the sidelink carrier, a Subcarrier Spacing (SCS) of a BWP of the sidelink carrier, a sidelink communication resource pool usable by the terminal device on the sidelink carrier, or a resource corresponding to a Sidelink Synchronization Signal and Sidelink Broadcast Channel Block (S-SSB) on the sidelink carrier.

In some embodiments of the present disclosure, the sidelink configuration information may further include an Absolute Radio Frequency Channel Number (ARFCN) of an unlicensed carrier associated with the sidelink licensed carrier and a bandwidth of the unlicensed carrier.

FIG. 11 is a schematic flowchart illustrating a wireless communication method 500 according to an embodiment of the present disclosure. The method can be performed interactively by a Cluster Header (CH) and a Cluster Member (CM), or of course, can be performed interactively by a terminal device located in the coverage of the network device and a terminal device located out of the coverage of the network device.

As shown in FIG. 11, the method 500 may include:
at S510, obtaining first configuration information for a sidelink licensed carrier and second configuration information for a sidelink unlicensed carrier; and
at S520, the first configuration information and/or the second configuration information.

In short, the first configuration information and/or the second configuration information obtained by the CM are information transmitted by a CN.

Based on the solutions shown in the methods 200-500, it can be known that the present disclosure provides a sidelink communication network structure with or without a central control node. In a network environment without a central control node, a terminal can determine a configuration of a sidelink licensed carrier according to configuration information from a network device or configuration information transmitted by another terminal on a sidelink channel, and then use one or more carriers to perform sidelink communication. In a sidelink communication network environment with a central control node, a CH can determine configuration information of a sidelink licensed carrier and/or a part of control information of a sidelink unlicensed carrier associated with the sidelink licensed carrier according to configuration information from a network device, and a CM can receive the configuration information from the network device, the configuration information transmitted by the CH and pre-configuration information, so as to determine the configuration information of the sidelink licensed carrier and information of one or more corresponding sidelink unlicensed carriers, thereby enabling the sidelink communication between the CH and the CM and between CMs on one or more sidelink carriers. With the assistance of the sidelink licensed carrier, the effective configuration of the sidelink unlicensed carrier can be achieved. In addition, as the terminal does not need to access the channel by means of CSMA/CA on the sidelink licensed carrier, the reliability of the sidelink data can be effectively improved and the delay can be reduced.

The preferred embodiments of the present disclosure have been described in detail above with reference to the accompanying drawings. However, the present disclosure is not limited to the specific details of the above embodiments. Within the scope of the technical concept of the present disclosure, various simple variants can be made to the technical solutions of the present disclosure. These simple variants all belong to the scope of the present disclosure. For example, the specific technical features described in the above specific embodiments can be combined in any suitable manner, provided that they do not conflict. In order to avoid unnecessary repetition, the present disclosure does not describe these possible combinations. In another example, the embodiments of the present disclosure can also be combined arbitrarily without departing from the concept of the present disclosure, these combinations should also be regarded as a part of the content disclosed in the present disclosure.

It should also be understood that, in the method embodiments of the present disclosure, the sequence numbers of the above processes do not mean the order of execution, and the order of execution of each process should be determined by its functions and internal logics, and the implementation of the embodiments of the present disclosure is not limited to any specific order of execution. In addition, in the embodiments of the present disclosure, the terms "downlink" and "uplink" are used to indicate the transmission direction of signals or data, where "downlink" is used to indicate that the transmission direction of signals or data is a first direction from a station to a user equipment of a cell, and "uplink" is used to indicate that the transmission direction of signals or data is a second direction from a user equipment of a cell to a station. For example, a "downlink signal" means that the transmission direction of the signal is the first direction. In addition, in the embodiment of the present disclosure, the term "and/or" only represents a relationship between correlated objects, including three relationships. In particular, "A and/or B" may mean A only, B only, or both A and B. In addition, the symbol "/" as used herein represents an "or" relationship between the correlated objects preceding and succeeding the symbol.

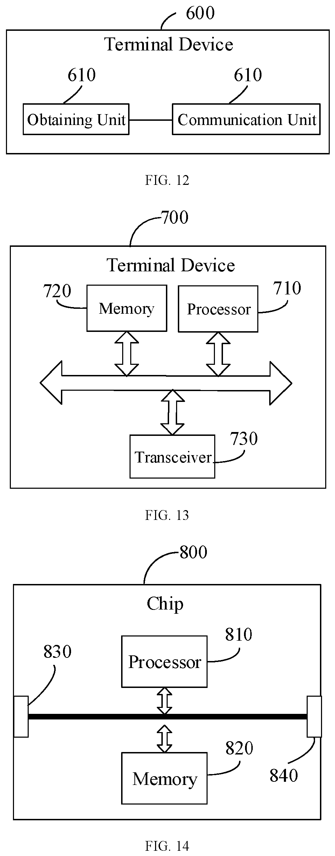

The method embodiments of the present disclosure have been described in detail above with reference to FIGS. 1 to 11, and the apparatuses according to the present disclosure will be described below with reference to FIGS. 12 to 14.

FIG. 12 is a schematic block diagram of a terminal device 600 according to an embodiment of the present disclosure.

It should be understood that the apparatus embodiments and the method embodiments may correspond to each other, and for similar descriptions, reference may be made to the method embodiments. Specifically, the terminal device 600 shown in FIG. 12 may correspond to the corresponding entity performing the methods 200 to 500 of the embodiments of the present disclosure, and the above and other operations and/or functions of the respective units in the terminal device 600 are provided for the purpose of implementing the corresponding processes in each method in FIG. 8 to FIG. 11, and details thereof will be omitted here for brevity. In other words, the terminal device 600 may be a terminal device located within the coverage of a network device, or may be a device located out of the coverage of a network device, or may be a cluster header, or may be a cluster member. The embodiment of the present disclosure is not limited to any of these examples. In other words, the terminal device can be applied to a system and/or sidelink communication with or without a cluster header. Optionally, the cluster header may also be referred to as a central control node.

The following describes a terminal device located within or out of the coverage of a network device.

As shown in FIG. 12, a terminal device 600 may include:
an obtaining unit 610 configured to obtain sidelink configuration information for a sidelink licensed carrier and a sidelink unlicensed carrier; and
a communication unit 620 configured to transmit and/or receive sidelink data on the sidelink licensed carrier and the sidelink unlicensed carrier according to the sidelink configuration information.

In some embodiments of the present disclosure, the sidelink licensed carrier may refer to a carrier which is usable for sidelink communication and on which the terminal device can access channel resources without channel sensing and/or avoidance, and/or the sidelink unlicensed carrier may refer to a carrier which is usable for sidelink communication and on which the terminal device needs to access channel resources by means of channel sensing and/or avoidance.

In some embodiments of the present disclosure, the obtaining unit 610 may be configured to:
obtain first configuration information on the sidelink licensed carrier.

In some embodiments of the present disclosure, the first configuration information may include information carried on configuration signaling transmitted by a network device and/or information carried on sidelink broadcast information transmitted by another terminal device.

In some embodiments of the present disclosure, the first configuration information may include information carried on configuration signaling transmitted by a network device, and the terminal device is capable of transmitting and receiving information on a Uu interface.

In some embodiments of the present disclosure, the first configuration information may be indicated by sidelink broadcast information transmitted by another terminal device on a first carrier. The first carrier and the sidelink licensed carrier may be same or different.

In some embodiments of the present disclosure, the obtaining unit 610 may be further configured to:
determine the first carrier.

In some embodiments of the present disclosure, the obtaining unit 610 may be configured to:
determine a frequency position of the first carrier and/or a bandwidth of the first carrier.

In some embodiments of the present disclosure, the obtaining unit 610 may be configured to:
obtain second configuration information on the sidelink unlicensed carrier.

In some embodiments of the present disclosure, the second configuration information may include at least one of:
information carried on configuration signaling transmitted by a network device;
information carried on sidelink broadcast information transmitted by another terminal device;
information obtained by the terminal device by interacting with another terminal device; or
information determined by the terminal device.

In some embodiments of the present disclosure, the information carried on the configuration signaling transmitted by the network device may include at least one of: an Absolute Radio Frequency Channel Number (ARFCN) of the sidelink unlicensed carrier, a bandwidth (BW) of the sidelink unlicensed carrier, or a resource pool on the sidelink unlicensed carrier usable by the terminal device for sidelink communication.

In some embodiments of the present disclosure, the second configuration information may be indicated by configuration signaling transmitted by a network device, and the terminal device is capable of transmitting and receiving information on a Uu interface.

In some embodiments of the present disclosure, the second configuration information may be determined by the terminal device, and the communication unit 620 may be configured to:

transmit the second configuration information determined by the terminal device to another terminal device.

In some embodiments of the present disclosure, the obtaining unit 610 may be further configured to:
determine Channel Occupation Time (COT) information of another terminal device on the sidelink unlicensed carrier; and
determine a channel access scheme for the sidelink unlicensed carrier based on the COT information.

In some embodiments of the present disclosure, the obtaining unit 610 may be configured to:
determine the COT information based on at least one of:
information transmitted by the other terminal device as received by the terminal device on the sidelink unlicensed carrier; or
information transmitted by the other terminal device as received by the terminal device on a licensed carrier associated with the sidelink unlicensed carrier.

In some embodiments of the present disclosure, the communication unit 620 may be further configured to:
transmit the COT information to the other terminal device via physical layer signaling on a second carrier.

The second carrier may include at least one of: the sidelink unlicensed carrier, an unlicensed carrier associated with the sidelink unlicensed carrier, or a licensed carrier associated with the sidelink unlicensed carrier.

In some embodiments of the present disclosure, a resource for transmitting service data on the second carrier may include an available resource within a time period [t+a, t+b], where t is time at which the terminal device determines the COT information, a or b is a non-negative value, and the communication unit 620 may be configured to:
transmit the COT information to the other terminal device via the physical layer signaling on the second carrier within the time period [t+a, t+b].

**In** some embodiments of the present disclosure, a resource for transmitting service data on the second carrier may include no available resource within a time period [t+a, t+b], and the communication unit 620 may be configured to:
trigger a resource selection operation or a resource reselection operation, and/or
transmit a Scheduling Request (SR) to a network device, for requesting the network device to allocate a sidelink resource for the terminal device.

In some embodiments of the present disclosure, a or b may be a predetermined value, or a or b may be a pre-configured value.

In some embodiments of the present disclosure, the physical layer signaling may be carried on a Physical Sidelink Control Channel (PSCCH) or a physical sidelink data channel (Physical Sidelink Shared Channel, PSSCH).

In some embodiments of the present disclosure, the communication unit 620 may be further configured to:
receive or transmit a Sidelink Synchronization Signal and Sidelink Broadcast Channel Block (S-SSB).

In some embodiments of the present disclosure, the communication unit 620 may be configured to:
use, when the terminal device is capable of transmitting and receiving information on a Uu interface, a network device as a synchronization source, and not transmit the S-SSB on the sidelink licensed carrier and/or the sidelink unlicensed carrier according to a configuration from the network device;
receive, when the terminal device is incapable of transmitting and receive information on the Uu interface and capable of receiving information on the sidelink licensed carrier, the S-SSB on the sidelink licensed carrier; or
receive, when the terminal device is only capable of receiving information on the sidelink unlicensed carrier, the S-SSB on the sidelink unlicensed carrier.

In some embodiments of the present disclosure, a transmission period of the S-SSB on the sidelink unlicensed carrier may be greater than a transmission period of the S-SSB on the sidelink licensed carrier.

In some embodiments of the present disclosure, the obtaining unit 610 may be further configured to:
obtain first association information including an unlicensed carrier associated with the sidelink licensed carrier.

In some embodiments of the present disclosure, the first association information may include bandwidth information of the unlicensed carrier and timing information of the unlicensed carrier.

In some embodiments of the present disclosure, the first association information may be pre-configuration information, or the first association information may be information transmitted by the terminal device via a Physical Sidelink Broadcast Channel (PSBCH).

In some embodiments of the present disclosure, the communication unit 620 may be further configured to:
receive configuration information of the unlicensed carrier transmitted by a network device.

In some embodiments of the present disclosure, the communication unit 620 may be configured to:
transmit a Physical Sidelink Shared Channel (PSSCH) on the sidelink unlicensed carrier; and
transmit Hybrid Automatic Repeat reQuest (HARQ) feedback information corresponding to the PSSCH on the sidelink licensed carrier.

In some embodiments of the present disclosure, a physical resource corresponding to the HARQ feedback information may be a resource determined based on a time-frequency resource of the PSSCH and information on a carrier on which the PSSCH is located.

In some embodiments of the present disclosure, a resource selected by the terminal device on the sidelink licensed carrier or a resource scheduled by a network device on the sidelink licensed carrier may only be used to transmit or receive sidelink data having a priority higher than a first threshold or a delay requirement lower than a second threshold.

In some embodiments of the present disclosure, the first threshold or the second threshold may be predetermined, or the first threshold or the second threshold may be a threshold configured by a network device.

In some embodiments of the present disclosure, the sidelink unlicensed carrier and the sidelink licensed carrier may be used for receiving or transmitting transmission data in different orders for same data, respectively.

In some embodiments of the present disclosure, a Physical Sidelink Control Channel (PSCCH) transmitted on the sidelink licensed carrier may be used to schedule a resource corresponding to a Physical Sidelink Shared Channel (PSSCH) on an unlicensed carrier associated with the sidelink licensed carrier, the PSCCH including an identifier of the unlicensed carrier.

In some embodiments of the present disclosure, a Physical Sidelink Control Channel (PSCCH) transmitted on the sidelink unlicensed carrier may be used to schedule a resource corresponding to a Physical Sidelink Shared Channel (PSSCH) on a licensed carrier associated with the sidelink unlicensed carrier, the PSCCH including an identifier of the sidelink licensed carrier.

In some embodiments of the present disclosure, the sidelink configuration information may include at least one of:
an Absolute Radio Frequency Channel Number (ARFCN) of a sidelink carrier, a bandwidth (BW) of the sidelink carrier, Bandwidth Part (BWP) configuration information of the sidelink carrier, a Subcarrier Spacing (SCS) of a BWP of the sidelink carrier, a sidelink communication resource pool usable by the terminal device on the sidelink carrier, or a resource corresponding to a Sidelink Synchronization Signal and Sidelink Broadcast Channel Block (S-SSB) on the sidelink carrier.

In some embodiments of the present disclosure, the sidelink configuration information may further include an Absolute Radio Frequency Channel Number (ARFCN) of an unlicensed carrier associated with the sidelink licensed carrier and a bandwidth of the unlicensed carrier.

In some embodiments of the present disclosure, the method may be applied in sidelink unicast communication between two devices, and the terminal device may be one of the two devices; or the method may be applied in sidelink multicast communication between a plurality of devices, and the terminal device belongs to at least one of the plurality of devices.

A cluster header will be described below. As shown in FIG. 12, a terminal device 600 may include:
an obtaining unit 610 configured to obtain first configuration information for a sidelink licensed carrier and second configuration information for a sidelink unlicensed carrier; and
a communication unit 620 configured to transmit the first configuration information and/or the second configuration information.

In some embodiments of the present disclosure, the first configuration information and/or the second configuration information may be information configured by a network device.

In some embodiments of the present disclosure, the sidelink unlicensed carrier may include one or more unlicensed carriers associated with the sidelink licensed carrier.

In some embodiments of the present disclosure, the second configuration information may be configuration information transmitted by a network device, or the second configuration information may be information determined by the CH.

The second configuration information may include at least one of:
an Absolute Radio Frequency Channel Number (ARFCN) of the unlicensed carrier, a bandwidth (BW) of the unlicensed carrier, Bandwidth Part (BWP) configuration information of the unlicensed carrier, a Subcarrier Spacing (SCS) of a BWP of the unlicensed carrier, or a sidelink communication resource pool usable by the terminal device on the unlicensed carrier.

In some embodiments of the present disclosure, the communication unit 620 may be configured to:
transmit the first configuration information and/or the second configuration information on the sidelink licensed carrier;
transmit the first configuration information and/or the second configuration information on the sidelink unlicensed carrier; or
transmit the first configuration information and/or the second configuration information on the sidelink licensed carrier and the sidelink unlicensed carrier.

In some embodiments of the present disclosure, the second configuration information may be carried on a physical channel, and a resource occupied by the physical channel may be a time-frequency resource on a first licensed carrier.

In some embodiments of the present disclosure, the physical channel may be a Physical Sidelink Broadcast Channel (PSBCH), or the physical channel may be a channel different from the PSBCH.

In some embodiments of the present disclosure, a time-frequency resource on the first licensed carrier may be a resource of a Sidelink Synchronization Signal and Sidelink Broadcast Channel Block (S-SSB), or the time-frequency resource on the first licensed carrier may be a resource determined based on the resource of the S-SSB.

In some embodiments of the present disclosure, the obtaining unit 610 may be further configured to:
determine a scheme for transmitting the first configuration information and/or the second configuration information.

In some embodiments of the present disclosure, the scheme for transmitting the first configuration information and/or the second configuration information may be predetermined, information pre-configured by a network device, or information determined by the CH.

In some embodiments of the present disclosure, the communication unit 620 may be further configured to:
transmit a Sidelink Synchronization Signal and Sidelink Broadcast Channel Block (S-SSB).

In some embodiments of the present disclosure, the communication unit 620 may be configured to:
use, when all Cluster Members (CMs) are capable of transmitting and receiving information on a Uu interface, a network device as a synchronization source, and not transmit the S-SSB on the sidelink licensed carrier and/or the sidelink unlicensed carrier;
transmit, when a CM is incapable of receiving on the Uu interface but is capable of receiving information on the sidelink licensed carrier, the S-SSB to the CM on the sidelink licensed carrier; or
transmit, when a CM is only capable of receiving information on the sidelink unlicensed carrier, the S-SSB to the CM on the sidelink unlicensed carrier.

In some embodiments of the present disclosure, a transmission period of the S-SSB on the sidelink unlicensed carrier may be greater than a transmission period of the S-SSB on the sidelink licensed carrier.

In some embodiments of the present disclosure, the communication unit 620 may be configured to:
transmit scheduling information or receiving sidelink feedback information according to the first configuration information, the scheduling information being used to schedule sidelink data; and/or
transmit the scheduling information or receiving the sidelink feedback information according to the second configuration information.

In some embodiments of the present disclosure, the scheduling information may be used to schedule a Cluster Member (CM) to transmit or receive the sidelink data on the sidelink licensed carrier and/or the sidelink unlicensed carrier.

In some embodiments of the present disclosure, a resource set corresponding to the sidelink data may be a resource configured by a network device or the CH.

In some embodiments of the present disclosure, the resource set may be at least one of a plurality of resource pools configured by the network device on the sidelink licensed carrier; or the resource set may be a subset of one resource pool configured by the network device on the sidelink licensed carrier, the subset including all time slots and a part of frequency domain resources in the one resource pool.

In some embodiments of the present disclosure, the scheduling information may be carried in Sidelink Control Information (SCI), the SCI including a first identifier and a second identifier, the first identifier identifying a source terminal transmitting a Physical Sidelink Shared Channel (PSSCH) according to the scheduling information, and the second identifier identifying at least one target terminal receiving the PSSCH according to the scheduling information.

In some embodiments of the present disclosure, a resource scheduled by the scheduling information may be located on the sidelink licensed carrier, and a resource scheduled by the scheduling information may only be used by the CM to transmit or receive data having a priority higher than a third threshold or a delay requirement lower than a fourth threshold.

In some embodiments of the present disclosure, the third threshold or the fourth threshold may be predetermined; or the third threshold or the fourth threshold may be a threshold configured by a network device or the CH.

In some embodiments of the present disclosure, the sidelink feedback information may include Hybrid Automatic Repeat reQuest (HARQ) feedback information.

In some embodiments of the present disclosure, the sidelink feedback information may be carried on a physical channel, and a physical resource occupied by the physical channel on the sidelink licensed carrier may be a resource determined based on the scheduling information and/or a time-frequency resource of the sidelink data.

In some embodiments of the present disclosure, the scheduling information may be used to schedule the CM to transmit or receive transmission data in different orders for same data on the sidelink unlicensed carrier and the sidelink licensed carrier, respectively.

In some embodiments of the present disclosure, the communication unit 620 may be further configured to:
transmit or receive Channel Occupation Time (COT) information.

In some embodiments of the present disclosure, the obtaining unit 610 may be further configured to:
determine an access scheme for the unlicensed carrier based on the COT information.

In some embodiments of the present disclosure, the obtaining unit 610 may be configured to:
access the unlicensed carrier according to a first access scheme when a transmission resource of the sidelink data is located within a COT range indicated by the COT information, or access the unlicensed carrier according to a second access scheme when the transmission resource of the sidelink data is located outside the COT range indicated by the COT information, the first access scheme requiring less time than the second access scheme.

In some embodiments of the present disclosure, the first access scheme and/or the second access scheme may be predetermined.

In some embodiments of the present disclosure, the communication unit 620 may be further configured to:
receive or transmit sidelink data on a resource selected by a Cluster Member (CM).

In some embodiments of the present disclosure, the resource selected by the CM may be located on the sidelink licensed carrier, and the resource selected by the CM may only be used by the CM to transmit data having a priority higher than a fifth threshold or a delay requirement lower than a sixth threshold.

In some embodiments of the present disclosure, the fifth threshold or the sixth threshold may be predetermined; or the fifth threshold or the sixth threshold may be a threshold configured by a network device or the CH.

In some embodiments of the present disclosure, the first configuration information may include at least one of:
an Absolute Radio Frequency Channel Number (ARFCN) of a sidelink carrier, a bandwidth (BW) of the sidelink carrier, Bandwidth Part (BWP) configuration information of the sidelink carrier, a Subcarrier Spacing (SCS) of a BWP of the sidelink carrier, a sidelink communication resource pool usable by the terminal device on the sidelink carrier, or a resource corresponding to a Sidelink Synchronization Signal and Sidelink Broadcast Channel Block (S-SSB) on the sidelink carrier.

In some embodiments of the present disclosure, the sidelink configuration information may further include an Absolute Radio Frequency Channel Number (ARFCN) of an unlicensed carrier associated with the sidelink licensed carrier and a bandwidth of the unlicensed carrier.

A cluster member will be described below.

As shown in FIG. 12, a terminal device 600 may include:
an obtaining unit 610 configured to obtain first configuration information for a sidelink licensed carrier and/or second configuration information for a sidelink unlicensed carrier; and
a communication unit 620 configured to perform sidelink communication according to the first configuration information and/or the second configuration information.

In some embodiments of the present disclosure, the first configuration information and/or the second configuration information may be information configured by a network device.

In some embodiments of the present disclosure, the sidelink unlicensed carrier may include one or more unlicensed carriers associated with the sidelink licensed carrier.

In some embodiments of the present disclosure, the second configuration information may be configuration information transmitted by a network device, or the second configuration information may be information determined by a Cluster Header (CH).

The second configuration information may include at least one of:
an Absolute Radio Frequency Channel Number (ARFCN) of the unlicensed carrier, a bandwidth (BW) of the unlicensed carrier, Bandwidth Part (BWP) configuration information of the unlicensed carrier, a Subcarrier Spacing (SCS) of a BWP of the unlicensed carrier, or a sidelink communication resource pool usable by the terminal device on the unlicensed carrier.

In some embodiments of the present disclosure, the obtaining unit 610 may be configured to:
receive the first configuration information and/or the second configuration information on the sidelink licensed carrier;
receive the first configuration information and/or the second configuration information on the sidelink unlicensed carrier; or
receive the first configuration information and/or the second configuration information on the sidelink licensed carrier and the sidelink unlicensed carrier.

In some embodiments of the present disclosure, the second configuration information may be carried on a physical channel, and a resource occupied by the physical channel may be a time-frequency resource on a first licensed carrier.

In some embodiments of the present disclosure, the physical channel may be a Physical Sidelink Broadcast Channel (PSBCH), or the physical channel may be a channel different from the PSBCH.

**In** some embodiments of the present disclosure, a time-frequency resource on the first licensed carrier may be a resource of a Sidelink Synchronization Signal and Sidelink Broadcast Channel Block (S-SSB), or the time-frequency resource on the first licensed carrier may be a resource determined based on the resource of the S-SSB.

In some embodiments of the present disclosure, the obtaining unit 610 may be further configured to:
determine a scheme for receiving the first configuration information and/or the second configuration information.

**In** some embodiments of the present disclosure, the scheme for receiving the first configuration information and/or the second configuration information may be predetermined, information pre-configured by a network device, or information determined by a Cluster Header (CH).

**In** some embodiments of the present disclosure, the communication unit 620 may be further configured to:
receive a Sidelink Synchronization Signal and Sidelink Broadcast Channel Block (S-SSB).

**In** some embodiments of the present disclosure, the communication unit 620 may be configured to:
use, when all CMs are capable of transmitting and receiving information on a Uu interface, a network device as a synchronization source, and not receive the S-SSB on the sidelink licensed carrier and/or the sidelink unlicensed carrier;
receive, when the CM is incapable of receiving on the Uu interface but is capable of receiving information on the sidelink licensed carrier, the S-SSB on the sidelink licensed carrier; or
receive, when the CM is only capable of receiving information on the sidelink unlicensed carrier, the S-SSB on the sidelink unlicensed carrier.

**In** some embodiments of the present disclosure, a transmission period of the S-SSB on the sidelink unlicensed carrier is greater than a transmission period of the S-SSB on the sidelink licensed carrier.

**In** some embodiments of the present disclosure, the communication unit 620 may be configured to:
receive scheduling information or transmit sidelink feedback information according to the first configuration information, the scheduling information being used to schedule sidelink data; and/or
receive the scheduling information or transmit the sidelink feedback information according to the second configuration information.

In some embodiments of the present disclosure, the scheduling information may be used to schedule the CM to transmit or receive the sidelink data on the sidelink licensed carrier and/or the sidelink unlicensed carrier.

In some embodiments of the present disclosure, a resource set corresponding to the sidelink data may be a resource configured by a network device or the CH.

In some embodiments of the present disclosure, the resource set may be at least one of a plurality of resource pools configured by the network device on the sidelink licensed carrier; or the resource set may be a subset of one resource pool configured by the network device on the sidelink licensed carrier, the subset including all time slots and a part of frequency domain resources in the one resource pool.

In some embodiments of the present disclosure, the scheduling information may be carried in Sidelink Control Information (SCI), the SCI including a first identifier and a second identifier, the first identifier identifying a source terminal transmitting a Physical Sidelink Shared Channel (PSSCH) according to the scheduling information, and the second identifier identifying at least one target terminal receiving the PSSCH according to the scheduling information.

In some embodiments of the present disclosure, a resource scheduled by the scheduling information may be located on the sidelink licensed carrier, and a resource scheduled by the scheduling information may only be used by the CM to transmit or receive data having a priority higher than a third threshold or a delay requirement lower than a fourth threshold.

In some embodiments of the present disclosure, the third threshold or the fourth threshold may be predetermined; or the third threshold or the fourth threshold may be a threshold configured by a network device or the CH.

In some embodiments of the present disclosure, the sidelink feedback information may include Hybrid Automatic Repeat reQuest (HARQ) feedback information.

In some embodiments of the present disclosure, the sidelink feedback information may be carried on a physical channel, and a physical resource occupied by the physical channel on the sidelink licensed carrier may be a resource determined based on the scheduling information and/or a time-frequency resource of the sidelink data.

In some embodiments of the present disclosure, the scheduling information may be used to schedule the CM to transmit or receive transmission data in different orders for same data on the sidelink unlicensed carrier and the sidelink licensed carrier, respectively.

In some embodiments of the present disclosure, the communication unit 620 may be further configured to:
transmit or receive Channel Occupation Time (COT) information.

In some embodiments of the present disclosure, the obtaining unit 610 may be further configured to:
determine an access scheme for the unlicensed carrier based on the COT information.

In some embodiments of the present disclosure, the obtaining unit 610 may be configured to:
access the unlicensed carrier according to a first access scheme when a transmission resource of the sidelink data is located within a COT range indicated by the COT information, or access the unlicensed carrier according to a second access scheme when the transmission resource of the sidelink data is located outside the COT range indicated by the COT information, the first access scheme requiring less time than the second access scheme.

In some embodiments of the present disclosure, the first access scheme and/or the second access scheme may be predetermined.

In some embodiments of the present disclosure, the communication unit 620 may be further configured to:
receive or transmit sidelink data on a resource selected by the CM.

In some embodiments of the present disclosure, the resource selected by the CM may be used by the CM to transmit or receive data having a priority higher than a fifth threshold or a delay requirement lower than a sixth threshold.

In some embodiments of the present disclosure, the fifth threshold or the sixth threshold may be predetermined; or the fifth threshold or the sixth threshold may be a threshold configured by a network device or the CH.

In some embodiments of the present disclosure, the first configuration information may include at least one of:
an Absolute Radio Frequency Channel Number (ARFCN) of a sidelink carrier, a bandwidth (BW) of the sidelink carrier, Bandwidth Part (BWP) configuration information of the sidelink carrier, a Subcarrier Spacing (SCS) of a BWP of the sidelink carrier, a sidelink communication resource pool usable by the terminal device on the sidelink carrier, or a resource corresponding to a Sidelink Synchronization Signal and Sidelink Broadcast Channel Block (S-SSB) on the sidelink carrier.

In some embodiments of the present disclosure, the sidelink configuration information may further include an Absolute Radio Frequency Channel Number (ARFCN) of an unlicensed carrier associated with the sidelink licensed carrier and a bandwidth of the unlicensed carrier.

The communication device according to the embodiment of the present disclosure has been described above from the perspective of functional modules with reference to the accompanying drawings. It should be understood that the functional modules can be implemented in the form of hardware, or by instructions in the form of software, or by a combination of hardware and software modules. Specifically, the steps of the method embodiments of the present disclosure may be completed by hardware integrated logic circuits in the processor and/or instructions in the form of software. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. Optionally, the storage medium can be located in the memory, and the processor can read information from the memory and perform the steps of the above methods in combination with its hardware. For example, the processing unit and the communication unit described above may be implemented by a processor and a transceiver, respectively.

FIG. 13 is a schematic diagram showing a structure of a communication device 700 according to an embodiment of the present disclosure.

The terminal device 700 shown in FIG. 13 includes a processor 710.

The processor 710 can invoke and execute a computer program from a memory to implement the method in the embodiment of the present disclosure.

Referring to FIG. 13 again, the terminal device 700 may further include a memory 720.

The memory 720 can store instruction information, and can also store codes, instructions, etc., to be executed by the processor 710. The processor 710 can invoke and execute a computer program from the memory 720 to implement the method in the embodiment of the present disclosure. The memory 720 may be a separate device independent from the processor 710, or may be integrated in the processor 710.

Referring to FIG. 13 again, the terminal device 700 may further include a transceiver 730.

The processor 710 may control the transceiver 730 to communicate with other devices, and in particular, transmit information or data to other devices, or receive information or data transmitted by other devices. The transceiver 730 may include a transmitter and a receiver. The transceiver 730 may further include one or more antennas.

Exemplarily, the components in the terminal device 700 are connected through a bus system, which includes a power bus, a control bus and a state signal bus in addition to a data bus.

It can be appreciated that the apparatus embodiments and the method embodiments may correspond to each other, and for similar description, reference can be made to the method embodiments. Specifically, the terminal device 700 shown in FIG. 13 may correspond to the corresponding entity performing any of the methods 200 to 500 according to the embodiments of the present disclosure, and the above and other operations and/or functions of the respective units in the terminal device 700 are provided for the purpose of implementing the corresponding process in each of the methods in FIG. 8 to FIG. 11. For brevity, the details will be omitted here. In other words, the terminal device 700 may be a terminal device located within the coverage of the network device, a device located outside the coverage of the network device, or may be a cluster header or a cluster member. The embodiment of the present disclosure is not limited to any of these examples.

In addition, an embodiment of the present disclosure further provides a chip.

For example, the chip may be an integrated circuit chip, which has a signal processing capability, and can implement or execute the methods, steps, and logic block diagrams disclosed in the embodiments of the present disclosure. The chip may also be referred to as a system level chip, a system chip, a chip system, a system-on-chip, or the like. Optionally, the chip can be applied in various communication devices, such that the communication devices installed with the chip can execute the methods, steps and logic block diagrams disclosed in the embodiments of the present disclosure.

FIG. 14 is a schematic diagram showing a structure of a chip 800 according to an embodiment of the present disclosure. As shown in FIG. 14, the chip 800 includes a processor 810.

The processor 810 can invoke and execute a computer program from a memory to implement the method in the embodiment of the present disclosure.

Referring to FIG. 14 again, the chip 800 may further include a memory 820.

The memory 820 can store instruction information, and can also store codes, instructions, etc., to be executed by the processor 810. The memory 820 may be a separate device independent from the processor 810, or may be integrated in the processor 810.

Referring to FIG. 14 again, the chip 800 may further include an input interface 830.

The processor 810 can control the input interface 830 to communicate with other devices or chips, and in particular, obtain information or data transmitted by other devices or chips.

Referring to FIG. 14 again, the chip 800 may further include an output interface 840.

The processor 810 can control the output interface 840 to communicate with other devices or chips, and in particular, output information or data to other devices or chips.

Exemplarily, the components in the chip 800 are connected through a bus system, which includes a power bus, a control bus and a state signal bus in addition to a data bus.

It can be appreciated that the chip 800 can be applied in the terminal device in the embodiments of the present disclosure, and the chip can implement the corresponding process implemented by the terminal device in any of the methods according to the embodiments of the present disclosure, and can also implement the corresponding process implemented by the terminal device in any of the methods according to the embodiments of the present disclosure. For brevity, the details will be omitted here. For example, the terminal device may be a terminal device located within the coverage of the network device, a device located outside the coverage of the network device, or may be a cluster header or a cluster member. The embodiment of the present disclosure is not limited to any of these examples.

The processor described above may include, but not limited to, a general purpose processor, a Digital Signal Processor (DSP), an Application Specific Integrated Circuit (ASIC), a Field Programmable Gate Array (FPGA) or another programmable logic device, a discrete gate or transistor logic device, a discrete hardware component, or the like.

The processor may be configured to implement or perform methods, steps, and logical block diagrams disclosed in the embodiments of the present disclosure. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, erasable programmable memory, or register. The storage medium can be located in the memory, and the processor can read information from the memory and perform the steps of the above methods in combination with its hardware.

The memory described above may include, but not limited to, a volatile memory and/or a non-volatile memory. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. As illustrative, rather than limiting, examples, many forms of RAMs are available, including Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM).

It is to be noted that the memory described herein is intended to include these and any other suitable types of memories.

An embodiment of the present disclosure also provides a computer readable storage medium storing a computer program. The computer readable storage medium stores one or more programs. The one or more programs include instructions which, when executed by a portable electronic device including a plurality of applications, cause the portable electronic device to perform the method according to any of the embodiments shown in the methods 200 to 500. Optionally, the computer readable storage medium can be applied in the mobile terminal/terminal device in the embodiment of the present disclosure, and the computer program can cause a computer to perform corresponding processes implemented by the mobile terminal/terminal device in the method according to any of the embodiments of the present disclosure. Details thereof will be omitted here for simplicity.

An embodiment of the present disclosure also provides a computer program product including a computer program. Optionally, the computer program product can be applied in the mobile terminal/terminal device in the embodiment of the present disclosure, and the computer program can cause a computer to perform corresponding processes implemented by the mobile terminal/terminal device in the method according to any of the embodiments of the present disclosure. Details thereof will be omitted here for simplicity.

An embodiment of the present disclosure also provides a computer program. The computer program includes instructions which, when executed by a portable electronic device including a plurality of applications, cause the portable electronic device to perform the method according to any of the embodiments shown in the methods 200 to 500. In other words, when the computer program is executed by a computer, it causes the computer to perform the method according to any of the embodiments shown in the methods 300 to 500.

In addition, an embodiment of the present disclosure also provides a communication system. The communication system may include the above terminal device and/or network device to form the communication system shown in FIG. 1 to FIG. 7. For brevity, the details will be omitted here. It should be noted that the terms "system" and the like as used herein may also be referred to as "network management architecture" or "network system" or the like.

It should also be understood that the terms used in the embodiments of the present disclosure and the claims as attached are only for the purpose of describing specific embodiments, and are not intended to limit the embodiments of the present disclosure.

For example, as used in the embodiments of the embodiments of the present disclosure and the claims as attached, the singular forms of "a," "said," "above," and "the" are intended to include the plurals form as well, unless the context clearly dictates otherwise.

It can be appreciated by those skilled in the art that units and algorithm steps in the examples described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of the embodiments of the present disclosure.

When the function is implemented in the form of a software functional unit and sold or used as a standalone product, it can be stored in a computer readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include a Universal Serial Bus flash drive, a mobile hard disk, a Read-Only Memory (ROM), a Random Access Memory (RAM), a magnetic disk, an optical disc, or any other medium capable of storing program codes.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways.

For example, the divisions of the units, modules, or components in the device embodiments described above are only divisions based on logical functions, and there may be other divisions in actual implementations. For example, more than one unit, module or component may be combined or integrated into another system, or some units, modules, or components can be ignored or omitted.

In another example, the units/modules/components described above as separate/explicit components may or may not be physically separated, that is, they may be co-located or distributed across a number of network elements. Some or all of the units/modules/components may be selected according to actual needs to achieve the objects of the embodiments of the present disclosure.

Finally, it is to be noted that the mutual coupling or direct coupling or communicative connection as shown or discussed above may be indirect coupling or communicative connection between devices or units via some interfaces which may be electrical, mechanical, or in any other forms.

While the specific embodiments of the present disclosure have been described above, the scope of the embodiments of the present disclosure is not limited to these embodiments. Various variants and alternatives can be made by those skilled in the art without departing from the scope of the embodiments of the present disclosure. These variants and alternatives are to be encompassed by the scope of the embodiments of present disclosure as defined by the claims as attached.

## Claims

1. A wireless communication method, performed by a terminal device, applied in sidelink communication without a cluster header, and comprising:
obtaining (S210), by the terminal device, sidelink configuration information for a sidelink licensed carrier and a sidelink unlicensed carrier; and
transmitting and/or receiving (S220), by the terminal device, sidelink data on the sidelink licensed carrier and the sidelink unlicensed carrier according to the sidelink configuration information,
the method further comprises:
obtaining, by the terminal device, first association information comprising the sidelink unlicensed carrier associated with the sidelink licensed carrier, bandwidth information of the sidelink unlicensed carrier and timing information of the sidelink unlicensed carrier,
wherein the first association information is pre-configuration information, or the first association information is information received by the terminal device via a Physical Sidelink Broadcast Channel, PSBCH,
wherein transmitting and/or receiving, by the terminal device, the sidelink data on the sidelink licensed carrier and the sidelink unlicensed carrier according to the sidelink configuration information comprises:
receiving, by the terminal device, a Physical Sidelink Shared Channel, PSSCH, on the sidelink unlicensed carrier; and
transmitting, by the terminal device, Hybrid Automatic Repeat reQuest, HARQ, feedback information corresponding to the PSSCH on the sidelink licensed carrier,
wherein a physical resource corresponding to the HARQ feedback information is a resource determined based on a time-frequency resource of the PSSCH and information on a carrier on which the PSSCH is located.

2. The method according to claim 1, wherein the sidelink licensed carrier is a carrier which is usable for sidelink communication and on which the terminal device can access channel resources without channel sensing and/or avoidance, and/or the sidelink unlicensed carrier is a carrier which is usable for sidelink communication and on which the terminal device needs to access channel resources by means of channel sensing and/or avoidance.

3. The method according to claim 1 or 2, wherein said obtaining, by the terminal device, the sidelink configuration information for the sidelink licensed carrier and the sidelink unlicensed carrier comprises:
obtaining, by the terminal device, first configuration information on the sidelink licensed carrier,
wherein the first configuration information comprises information carried on configuration signaling transmitted by a network device and/or information carried on sidelink broadcast information transmitted by another terminal device.

4. The method according to claim 1 or 2, wherein said obtaining, by the terminal device, the sidelink configuration information for the sidelink licensed carrier and the sidelink unlicensed carrier comprises:
obtaining, by the terminal device, second configuration information on the sidelink unlicensed carrier,
wherein the second configuration information comprises at least one of:
information carried on configuration signaling transmitted by a network device;
information carried on sidelink broadcast information transmitted by another terminal device;
information obtained by the terminal device by interacting with another terminal device; or
information determined by the terminal device.

5. The method according to claim 4, wherein the information carried on the configuration signaling transmitted by the network device comprises at least one of: an Absolute Radio Frequency Channel Number, ARFCN, of the sidelink unlicensed carrier, a bandwidth, BW, of the sidelink unlicensed carrier, or a resource pool on the sidelink unlicensed carrier usable by the terminal device for sidelink communication.

6. The method according to any of claims 1 to 5, further comprising:
determining, by the terminal device, first Channel Occupation Time, COT, information of another terminal device on the sidelink unlicensed carrier; and
determining, by the terminal device, a channel access scheme for the sidelink unlicensed carrier based on the first COT information.

7. The method according to claim 6, further comprising:
transmitting, by the terminal device, second COT information to the other terminal device via physical layer signaling on a second carrier,
wherein the physical layer signaling is carried on a Physical Sidelink Control Channel, PSCCH, or a Physical Sidelink Shared Channel, PSSCH,
wherein the second carrier comprises at least one of the sidelink unlicensed carrier or the sidelink licensed carrier associated with the sidelink unlicensed carrier.

8. The method according to claim 7, wherein a resource for transmitting service data on the second carrier includes an available resource within a time period [t+a, t+b], where t is time at which the terminal device determines the COT information, a or b is a non-negative value, and
said transmitting, by the terminal device, the COT information to the other terminal device via the physical layer signaling on the second carrier comprises:
transmitting, by the terminal device, the COT information to the other terminal device via the physical layer signaling on the second carrier within the time period [t+a, t+b], wherein a or b is a predetermined value, or a or b is a pre-configured value.

9. The method according to claim 7, wherein a resource for transmitting service data on the second carrier includes no available resource within a time period [t+a, t+b], and the method further comprises:
triggering, by the terminal device, a resource selection operation or a resource reselection operation, and/or
transmitting, by the terminal device, a Scheduling Request, SR, to a network device, the SR being used for requesting the network device to allocate a sidelink resource for the terminal device.

10. The method according to any of claims 1 to 9, further comprising:
using, by the terminal device when the terminal device is capable of transmitting and receiving information on a Uu interface, a network device as a synchronization source, and transmitting the S-SSB on the sidelink licensed carrier and/or the sidelink unlicensed carrier according to a configuration from the network device;
receiving, by the terminal device when the terminal device is incapable of transmitting and receive information on the Uu interface and capable of receiving information on the sidelink licensed carrier, the S-SSB on the sidelink licensed carrier; or
receiving, by the terminal device when the terminal device is only capable of receiving information on the sidelink unlicensed carrier, the S-SSB on the sidelink unlicensed carrier.

11. The method according to any of claims 1 to 10, wherein a resource selected by the terminal device on the sidelink licensed carrier or a resource scheduled by a network device on the sidelink licensed carrier is only used to transmit or receive sidelink data having a priority higher than a first threshold or a delay requirement lower than a second threshold,
wherein the first threshold or the second threshold is predetermined, or the first threshold or the second threshold is a threshold configured by a network device.

## Patentansprüche

1. Verfahren für drahtlose Kommunikation, durchgeführt durch eine Endgerätvorrichtung, angewandt bei Sidelink-Kommunikation ohne einen Cluster-Header, und Folgendes umfassend:
Erhalten (S210), durch die Endgerätvorrichtung, von Sidelink-Konfigurationsinformationen für einen lizenzierten Sidelink-Träger und einen nicht lizenzierten Sidelink-Träger; und
Übertragen und/oder Empfangen (S220), durch die Endgerätvorrichtung, von Sidelink-Daten auf dem lizenzierten Sidelink-Träger und dem nicht lizenzierten Sidelink-Träger gemäß den Sidelink-Konfigurationsinformationen,
wobei das Verfahren ferner Folgendes umfasst:
Erhalten, durch die Endgerätvorrichtung, von ersten Assoziationsinformationen, die den nicht lizenzierten Sidelink-Träger, der mit dem lizenzierten Sidelink-Träger assoziiert ist, Bandbreiteninformationen des nicht lizenzierten Sidelink-Trägers und Zeitsteuerungsinformationen des nicht lizenzierten Sidelink-Trägers umfassen,
wobei die ersten Assoziationsinformationen Vorkonfigurationsinformationen sind oder die ersten Assoziationsinformationen durch die Endgerätvorrichtung über einen physikalischen Sidelink-Broadcast-Kanal, PSBCH, empfangene Informationen sind,
wobei Übertragen und/oder Empfangen, durch die Endgerätvorrichtung, der Sidelink-Daten auf dem lizenzierten Sidelink-Träger und dem nicht lizenzierten Sidelink-Träger gemäß den Sidelink-Konfigurationsinformationen Folgendes umfasst:
Empfangen, durch die Endgerätvorrichtung, eines physikalischen Sidelink-Shared-Kanals, PSSCH, auf dem nicht lizenzierten Sidelink-Träger; und
Übertragen, durch die Endgerätvorrichtung, von Hybrid-Automatic-Repeat-reQuest- bzw. HARQ-Rückmeldungsinformationen, die dem PSSCH entsprechen, auf dem lizenzierten Sidelink-Träger,
wobei ein physikalisches Betriebsmittel, das den HARQ Rückmeldungsinformationen entspricht, ein Betriebsmittel ist, das basierend auf einem Zeit-Frequenz-Betriebsmittel des PSSCH und Informationen über einen Träger, auf dem der PSSCH angeordnet ist, bestimmt wird.

2. Verfahren nach Anspruch 1, wobei der lizenzierte Sidelink-Träger ein Träger ist, der für Sidelink-Kommunikation verwendbar ist und auf dem die Endgerätvorrichtung auf Kanalbetriebsmittel ohne Kanalerfassung und/oder -vermeidung zugreifen kann, und/oder der nicht lizenzierte Sidelink-Träger ein Träger ist, der für Sidelink-Kommunikation verwendbar ist und auf dem die Endgerätvorrichtung auf Kanalbetriebsmittel mittels Kanalerfassung und/oder -vermeidung zugreifen muss.

3. Verfahren nach Anspruch 1 oder 2, wobei das Erhalten, durch die Endgerätvorrichtung, der Sidelink-Konfigurationsinformationen für den lizenzierten Sidelink-Träger und den nicht lizenzierten Sidelink-Träger Folgendes umfasst:
Erhalten, durch die Endgerätvorrichtung, von ersten Konfigurationsinformationen auf dem lizenzierten Sidelink-Träger,
wobei die ersten Konfigurationsinformationen Informationen, die auf Konfigurationssignalisierung getragen werden, die durch eine Netzwerkvorrichtung übertragen wird, und/oder Informationen, die auf Sidelink-Broadcast-Informationen getragen werden, die durch eine andere Endgerätvorrichtung übertragen werden, umfassen.

4. Verfahren nach Anspruch 1 oder 2, wobei das Erhalten, durch die Endgerätvorrichtung, der Sidelink-Konfigurationsinformationen für den lizenzierten Sidelink-Träger und den nicht lizenzierten Sidelink-Träger Folgendes umfasst:
Erhalten, durch die Endgerätvorrichtung, von zweiten Konfigurationsinformationen auf dem nicht lizenzierten Sidelink-Träger,
wobei die zweiten Konfigurationsinformationen mindestens eines von Folgendem umfassen:
Informationen, die auf Konfigurationssignalisierung getragen werden, die durch eine Netzwerkvorrichtung übertragen wird;
Informationen, die auf Sidelink-Broadcast-Informationen getragen werden, die durch eine andere Endgerätvorrichtung übertragen werden;
Informationen, die durch die Endgerätvorrichtung durch Interagieren mit einer anderen Endgerätvorrichtung erhalten werden; oder
Informationen, die durch die Endgerätvorrichtung bestimmt werden.

5. Verfahren nach Anspruch 4, wobei die Informationen, die auf der Konfigurationssignalisierung getragen werden, die durch die Netzwerkvorrichtung übertragen wird, mindestens eines von Folgendem umfassen: eine absolute Funkfrequenzkanalnummer, ARFCN, des nicht lizenzierten Sidelink-Trägers, eine Bandbreite, BW, des nicht lizenzierten Sidelink-Trägers oder einen Betriebsmittelpool auf dem nicht lizenzierten Sidelink-Träger, der durch die Endgerätvorrichtung für Sidelink-Kommunikation verwendbar ist.

6. Verfahren nach einem der Ansprüche 1 bis 5, ferner umfassend:
Bestimmen, durch die Endgerätvorrichtung, von ersten Kanalbelegungszeit- bzw. COT-Informationen einer anderen Endgerätvorrichtung auf dem nicht lizenzierten Sidelink-Träger; und
Bestimmen, durch die Endgerätvorrichtung, eines Kanalzugangsschemas für den nicht lizenzierten Sidelink-Träger basierend auf den ersten COT-Informationen.

7. Verfahren nach Anspruch 6, ferner umfassend:
Übertragen, durch die Endgerätvorrichtung, von zweiten COT-Informationen an die andere Endgerätvorrichtung über Signalisierung in der physikalischen Schicht auf einem zweiten Träger,
wobei die Signalisierung in der physikalischen Schicht auf einem physikalischen Sidelink-Steuerkanal, PSCCH, oder einem physikalischen Sidelink-Shared-Kanal, PSSCH, getragen wird,
wobei der zweite Träger mindestens eines des nicht lizenzierten Sidelink-Trägers oder des lizenzierten Sidelink-Trägers, der mit dem nicht lizenzierten Sidelink-Träger assoziiert ist, umfasst.

8. Verfahren nach Anspruch 7, wobei ein Betriebsmittel zum Übertragen von Dienstdaten auf dem zweiten Träger ein verfügbares Betriebsmittel innerhalb einer Zeitperiode [t+a, t+b] enthält, wobei t eine Zeit ist, zu der die Endgerätvorrichtung die COT-Informationen bestimmt, a oder b ein nicht negativer Wert ist, und
das Übertragen, durch die Endgerätvorrichtung, der COT-Informationen an die andere Endgerätvorrichtung über die Signalisierung in der physikalischen Schicht auf dem zweiten Träger Folgendes umfasst:
Übertragen, durch die Endgerätvorrichtung, der COT-Informationen an die andere Endgerätvorrichtung über die Signalisierung in der physikalischen Schicht auf dem zweiten Träger innerhalb der Zeitperiode [t+a, t+b], wobei a oder b ein im Voraus bestimmter Wert ist oder a oder b ein im Voraus konfigurierter Wert ist.

9. Verfahren nach Anspruch 7, wobei ein Betriebsmittel zum Übertragen von Dienstdaten auf dem zweiten Träger kein verfügbares Betriebsmittel innerhalb einer Zeitperiode [t+a, t+b] enthält und das Verfahren ferner Folgendes umfasst:
Auslösen, durch die Endgerätvorrichtung, einer Betriebsmittelauswahloperation oder einer Betriebsmittelneuauswahloperation und/oder
Übertragen, durch die Endgerätvorrichtung, einer Planungsanforderung, SR, an eine Netzwerkvorrichtung, wobei die SR verwendet wird, die Netzwerkvorrichtung anzufordern, ein Sidelink-Betriebsmittel für die Endgerätvorrichtung zuzuordnen.

10. Verfahren nach einem der Ansprüche 1 bis 9, ferner umfassend:
Verwenden, durch die Endgerätvorrichtung, wenn die Endgerätvorrichtung imstande ist, Informationen auf einer Uu-Schnittstelle zu übertragen und zu empfangen, einer Netzwerkvorrichtung als eine Synchronisationsquelle und Übertragen des S-SSB auf dem lizenzierten Sidelink-Träger und/oder dem nicht lizenzierten Sidelink-Träger gemäß einer Konfiguration von der Netzwerkvorrichtung;
Empfangen, durch die Endgerätvorrichtung, wenn die Endgerätvorrichtung nicht imstande ist, Informationen auf der Uu-Schnittstelle zu übertragen und zu empfangen, und imstande ist, Informationen auf dem lizenzierten Sidelink-Träger zu empfangen, des S-SSB auf dem lizenzierten Sidelink-Träger; oder
Empfangen, durch die Endgerätvorrichtung, wenn die Endgerätvorrichtung nur imstande ist, Informationen auf dem nicht lizenzierten Sidelink-Träger zu empfangen, des S-SSB auf dem nicht lizenzierten Sidelink-Träger.

11. Verfahren nach einem der Ansprüche 1 bis 10, wobei ein durch die Endgerätvorrichtung auf dem lizenzierten Sidelink-Träger ausgewähltes Betriebsmittel oder ein durch eine Netzwerkvorrichtung auf dem lizenzierten Sidelink-Träger geplantes Betriebsmittel nur verwendet wird, um Sidelink-Daten, die eine Priorität, die höher als ein erster Schwellenwert ist, oder eine Verzögerungsanforderung, die niedriger als ein zweiter Schwellenwert ist, aufweisen, zu übertragen oder zu empfangen,
wobei der erste Schwellenwert oder der zweite Schwellenwert im Voraus bestimmt ist oder der erste Schwellenwert oder der zweite Schwellenwert ein durch eine Netzwerkvorrichtung konfigurierter Schwellenwert ist.

## Revendications

1. Procédé de communication sans fil, réalisé par un dispositif terminal, appliqué dans une communication sur liaison latérale sans en-tête de groupe, et comprenant :
l'obtention (S210), par le dispositif terminal, d'informations de configuration de liaison latérale pour une porteuse sous licence de liaison latérale et une porteuse sans licence de liaison latérale ; et
la transmission et/ou la réception (S220), par le dispositif terminal, de données de liaison latérale sur la porteuse sous licence de liaison latérale et la porteuse sans licence de liaison latérale en fonction des informations de configuration de liaison latérale,
le procédé comprenant en outre :
l'obtention, par le dispositif terminal, de premières informations d'association comprenant la porteuse sans licence de liaison latérale associée à la porteuse sous licence de liaison latérale, des informations de bande passante de la porteuse sans licence de liaison latérale et des informations de synchronisation de la porteuse sans licence de liaison latérale,
les premières informations d'association étant des informations de pré-configuration, ou les premières informations d'association étant des informations reçues par le dispositif terminal par l'intermédiaire d'un canal physique de diffusion de liaison latérale, PSBCH,
la transmission et/ou la réception, par le dispositif terminal, des données de liaison latérale sur la porteuse sous licence de liaison latérale et la porteuse sans licence de liaison latérale en fonction des informations de configuration de liaison latérale comprenant :
la réception, par le dispositif terminal, d'un canal partagé de liaison latérale physique, PSSCH, sur la porteuse sans licence de liaison latérale ; et
la transmission, par le dispositif terminal, d'informations de rétroaction de demande de répétition automatique hybride, HARQ, correspondant au PSSCH sur la porteuse sous licence de liaison latérale,
une ressource physique correspondant aux informations de rétroaction HARQ étant une ressource déterminée sur la base d'une ressource temps-fréquence du PSSCH et d'informations sur une porteuse sur laquelle le PSSCH est situé.

2. Procédé selon la revendication 1, la porteuse sous licence de liaison latérale étant une porteuse qui est utilisable pour une communication sur liaison latérale et sur laquelle le dispositif terminal peut accéder à des ressources de canal sans détection et/ou évitement de canal, et/ou la porteuse sans licence de liaison latérale étant une porteuse qui est utilisable pour une communication sur liaison latérale et sur laquelle le dispositif terminal doit accéder à des ressources de canal au moyen d'une détection et/ou d'un évitement de canal.

3. Procédé selon la revendication 1 ou 2, ladite obtention, par le dispositif terminal, des informations de configuration de liaison latérale pour la porteuse sous licence de liaison latérale et la porteuse sans licence de liaison latérale comprenant :
l'obtention, par le dispositif terminal, de premières informations de configuration sur la porteuse sous licence de liaison latérale,
les premières informations de configuration comprenant des informations transportées sur une signalisation de configuration transmise par un dispositif de réseau et/ou des informations transportées sur des informations de diffusion de liaison latérale transmises par un autre dispositif terminal.

4. Procédé selon la revendication 1 ou 2, ladite obtention, par le dispositif terminal, des informations de configuration de liaison latérale pour la porteuse sous licence de liaison latérale et la porteuse sans licence de liaison latérale comprenant :
l'obtention, par le dispositif terminal, de secondes informations de configuration sur la porteuse sans licence de liaison latérale,
les secondes informations de configuration comprenant au moins l'une parmi :
des informations transportées sur une signalisation de configuration transmise par un dispositif de réseau ;
des informations transportées sur des informations de diffusion de liaison latérale transmises par un autre dispositif terminal ;
des informations obtenues par le dispositif terminal en interagissant avec un autre dispositif terminal ; ou
des informations déterminées par le dispositif terminal.

5. Procédé selon la revendication 4, les informations transportées sur la signalisation de configuration transmise par le dispositif de réseau comprenant au moins l'un parmi : un Numéro de Canal de Radiofréquence Absolu, ARFCN, de la porteuse sans licence de liaison latérale, une largeur de bande, BW, de la porteuse sans licence de liaison latérale, ou un pool de ressources sur la porteuse sans licence de liaison latérale utilisable par le dispositif terminal pour une communication sur liaison latérale.

6. Procédé selon l'une quelconque des revendications 1 à 5, comprenant en outre :
la détermination, par le dispositif terminal, de premières informations de temps d'occupation de canal, COT, d'un autre dispositif terminal sur la porteuse sans licence de liaison latérale ; et
la détermination, par le dispositif terminal, d'un schéma d'accès au canal pour la porteuse sans licence de liaison latérale sur la base des premières informations de COT.

7. Procédé selon la revendication 6, comprenant en outre :
la transmission, par le dispositif terminal, de secondes informations de COT à l'autre dispositif terminal par l'intermédiaire d'une signalisation de couche physique sur une seconde porteuse,
la signalisation de couche physique étant transportée sur un canal de commande de liaison latérale physique, PSCCH, ou un canal partagé de liaison latérale physique, PSSCH,
la seconde porteuse comprenant au moins l'une de la porteuse sans licence de liaison latérale ou de la porteuse sous licence de liaison latérale associée à la porteuse sans licence de liaison latérale.

8. Procédé selon la revendication 7, une ressource pour transmettre des données de service sur la seconde porteuse incluant une ressource disponible à l'intérieur d'une période de temps [t+a, t+b], où t est le temps auquel le dispositif terminal détermine les informations de COT, a ou b étant une valeur non négative, et
ladite transmission, par le dispositif terminal, des informations de COT à l'autre dispositif terminal par l'intermédiaire de la signalisation de couche physique sur la seconde porteuse comprenant :
la transmission, par le dispositif terminal, des informations de COT à l'autre dispositif terminal par l'intermédiaire de la signalisation de couche physique sur la seconde porteuse à l'intérieur de la période de temps [t+a, t+b], a ou b étant une valeur prédéterminée, ou a ou b étant une valeur préconfigurée.

9. Procédé selon la revendication 7, une ressource pour transmettre des données de service sur la seconde porteuse n'incluant aucune ressource disponible à l'intérieur d'une période de temps [t+a, t+b], et le procédé comprenant en outre :
le déclenchement, par le dispositif terminal, d'une opération de sélection de ressource ou d'une opération de resélection de ressource, et/ou
la transmission, par le dispositif terminal, d'une Demande d'Ordonnancement, SR, à un dispositif de réseau, la SR étant utilisée pour demander au dispositif de réseau d'allouer une ressource de liaison latérale pour le dispositif terminal.

10. Procédé selon l'une quelconque des revendications 1 à 9, comprenant en outre :
l'utilisation, par le dispositif terminal lorsque le dispositif terminal est capable de transmettre et de recevoir des informations sur une interface Uu, d'un dispositif de réseau comme source de synchronisation, et la transmission du S-SSB sur la porteuse sous licence de liaison latérale et/ou la porteuse sans licence de liaison latérale selon une configuration provenant du dispositif de réseau ;
la réception, par le dispositif terminal lorsque le dispositif terminal est incapable de transmettre et de recevoir des informations sur l'interface Uu et capable de recevoir des informations sur la porteuse sous licence de liaison latérale, du S-SSB sur la porteuse sous licence de liaison latérale ; ou
la réception, par le dispositif terminal lorsque le dispositif terminal est seulement capable de recevoir des informations sur la porteuse sans licence de liaison latérale, du S-SSB sur la porteuse sans licence de liaison latérale.

11. Procédé selon l'une quelconque des revendications 1 à 10, une ressource sélectionnée par le dispositif terminal sur la porteuse sous licence de liaison latérale ou une ressource ordonnancée par un dispositif de réseau sur la porteuse sous licence de liaison latérale étant uniquement utilisée pour transmettre ou recevoir des données de liaison latérale ayant une priorité supérieure à un premier seuil ou une exigence de délai inférieure à un second seuil,
le premier seuil ou le second seuil étant prédéterminé, ou le premier seuil ou le second seuil étant un seuil configuré par un dispositif de réseau.
